(19) **Europäisches Patentamt**
**European Patent Office**
**Office européen des brevets**

(11) **EP 4 691 613 A1**

(12) **EUROPEAN PATENT APPLICATION**
published in accordance with Art. 153(4) EPC

(43) Date of publication:
**11.02.2026 Bulletin 2026/07**

(21) Application number: **24780943.7**

(22) Date of filing: **01.04.2024**

(51) International Patent Classification (IPC):
**B01D 71/02** (2006.01)   **B01D 69/00** (2006.01)
**B01D 69/10** (2006.01)   **B01D 69/12** (2006.01)
**C01B 39/48** (2006.01)

(52) Cooperative Patent Classification (CPC):
**B01D 69/00; B01D 69/10; B01D 69/12;
B01D 71/02; C01B 39/48**

(86) International application number:
**PCT/JP2024/013527**

(87) International publication number:
**WO 2024/204851 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023059406**

(71) Applicant: **Mitsubishi Chemical Corporation
Tokyo 100-8251 (JP)**

(72) Inventors:
• **TANABE, Nobutake**
  **Tokyo 100-8251 (JP)**
• **HAYASHI, Mikio**
  **Tokyo 100-8251 (JP)**
• **KUNITAKE, Yusuke**
  **Tokyo 100-8251 (JP)**

(74) Representative: **Hoffmann Eitle
Patent- und Rechtsanwälte PartmbB
Arabellastraße 30
81925 München (DE)**

(54) **ZEOLITE MEMBRANE COMPOSITE AND METHOD FOR PRODUCING PURIFIED COMPONENT**

(57)  The object of an aspect of the present invention is to provide a zeolite membrane composite having high separation performance. A zeolite membrane composite in accordance with an aspect of the present invention has an inorganic porous support and a zeolite membrane which is formed on a surface of the inorganic porous support. In an X-ray diffraction pattern obtained by irradiating a surface of the zeolite membrane with X-rays at the minimum incident angle that allows the X-rays to pass through the zeolite membrane, an integrated intensity of a peak at or around $2\theta=9.6°$ is 6.0 times or more an integrated intensity of a peak at or around $2\theta=20.8°$.

FIG. 1

# EP 4 691 613 A1

**Description**

Technical Field

The present invention relates to a zeolite membrane composite and a method for producing a purified component.

Background Art

In recent years, a technique has been known for producing a purified component by causing one component contained in a mixture of gases or liquids to pass through a zeolite membrane of a zeolite membrane composite so that the one component is separated from the mixture. The zeolite membrane composite is known to include a zeolite membrane composite which is specified by the ratio of intensities of specific peaks in an X-ray diffraction pattern obtained by irradiating, with X-rays, a surface of a zeolite membrane formed on an inorganic porous support (see, for example, Patent Literature 1).

Citation List

[Patent Literature]

[Patent Literature 1]
International Publication No. WO 2013/125660

Summary of Invention

Technical Problem

Conventionally, techniques for producing purified components have been attracting increasing attention. Therefore, there is a demand for zeolite membrane composites having higher separation performance, and there is a demand for more efficient production of purified components with use of such zeolite membrane composites.
The object of an aspect of the present invention is to provide a zeolite membrane composite having high separation performance.

Solution to Problem

A first aspect of the present invention is a zeolite membrane composite including an inorganic porous support and a zeolite membrane which is formed on a surface of the inorganic porous support, wherein in an X-ray diffraction pattern obtained by irradiating a surface of the zeolite membrane with X-rays at a minimum incident angle that allows the X-rays to pass through the zeolite membrane, an integrated intensity of a peak at or around $2\theta=9.6°$ is 6.0 times or more an integrated intensity of a peak at or around $2\theta=20.8°$.
A second aspect of the present invention is such that, in the zeolite membrane composite of the first aspect, in the X-ray diffraction pattern obtained by irradiating the surface of the zeolite membrane with the X-rays at the minimum incident angle that allows the X-rays to pass through the zeolite membrane, the integrated intensity of the peak at or around $2\theta=9.6°$ is 6.0 times or more an integrated intensity of a peak at or around $2\theta=16.8°$.
A third aspect of the present invention is such that, in the zeolite membrane composite of the first or second aspect, in an X-ray diffraction pattern obtained by irradiating the surface of the zeolite membrane with X-rays that reach the inorganic porous support, an integrated intensity of a peak at or around $2\theta=17.9°$ is less than 0.5 times an integrated intensity of a peak at or around $2\theta=20.8°$, and an integrated intensity of a peak at or around $2\theta=9.6°$ is 2.0 times or more but less than 6.0 times the integrated intensity of the peak at or around $2\theta=20.8°$.
A fourth aspect of the present invention is such that, in the zeolite membrane composite of any one of the first through third aspects, an $SiO_2/Al_2O_3$ molar ratio of the zeolite membrane is 6 or more but 500 or less..
A fifth aspect of the present invention is a method for producing a purified component, the method including: bringing, into contact with the zeolite membrane composite in any one of the first through fourth aspects, a mixture containing a first component for which the zeolite membrane of the zeolite membrane composite has higher permeability and a second component for which the zeolite membrane of the zeolite membrane composite has lower permeability; and obtaining one or both of a first purified component which is the first component that has passed through the zeolite membrane and a second purified component which is the second component that has not passed through the zeolite membrane.

Advantageous Effects of Invention

In an aspect of the present invention, it is possible to provide a zeolite membrane composite having high separation performance.

Brief Description of Drawings

Fig. 1 schematically illustrates the structure of a zeolite membrane composite in accordance with an embodiment of the present invention.
Fig. 2 schematically illustrates a part A in Fig. 1.
Fig. 3 schematically illustrates the configuration of a device for carrying out a single-component gas permeability test in the examples of the present invention.
Fig. 4 illustrates an X-ray diffraction pattern in grazing incidence X-ray diffraction of a membrane composite of Example 1.
Fig. 5 illustrates an X-ray diffraction pattern in grazing incidence X-ray diffraction of a membrane composite of Comparative Example 1.
Fig. 6 illustrates an X-ray diffraction pattern in grazing incidence X-ray diffraction of a membrane composite of Comparative Example 2.

Description of Embodiments

The following description discusses an embodiment of the present invention in detail. In the present specification, the term "zeolite membrane composite" is also referred to as "membrane composite", the term "inorganic porous support" is also referred to as "support", and the term "CHA-type aluminosilicate zeolite" is also referred to as "CHA-type zeolite".

[Zeolite membrane composite]

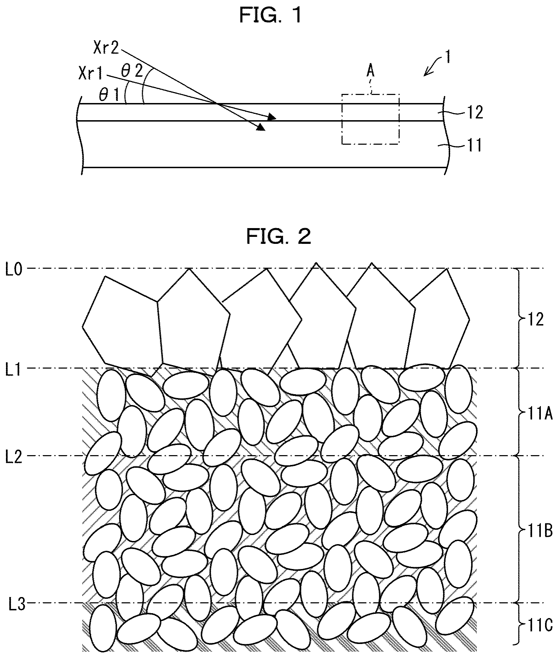

A zeolite membrane composite in accordance with an embodiment of the present invention has an inorganic porous support and a zeolite membrane which is formed on a surface of the inorganic porous support.
The structure of the zeolite membrane composite in accordance with an embodiment of the present invention is schematically illustrated in Fig. 1. A membrane composite 1 has a support 11 and a zeolite membrane 12 which is formed on a surface of the support 11. The position of the zeolite membrane 12 on the support 11 is not limited. For example, in a case where the support 11 has a tubular shape, the zeolite membrane 12 may be on the outer surface of the support 11, on the inner surface of the support 11, or on both surfaces of the support 11. From the perspective of the pressure resistance of the zeolite membrane 12 and reduction in permeation resistance of the zeolite membrane 12, the zeolite membrane 12 is preferably on the outer surface of the support 11.
The membrane composite 1 is configured such that a zeolite adheres, in a membrane form, to the surface etc. of the support 11. In some cases, a part of the zeolite preferably adheres to the inside of the support 11, from the perspective of increase in supporting strength of the support 11 with respect to the zeolite membrane 12.
The zeolite membrane 12 may be laminated on the surface of the support 11, or may be formed by the zeolite crystallizing so as to fill pores in a surface layer of the support 11. In this case, it is preferable from the perspective of improvement in separation performance of the membrane composite 1 that (i) the zeolite membrane 12 do not have a continuous crack or micropore through which the inside and outside of the zeolite membrane 12 are in communication with each other, (ii) the zeolite membrane 12 do not have a mass of an amorphous substance or the like other than zeolite crystals, and (iii) the zeolite membrane 12 be a so-called dense membrane.
Such a preferable membrane composite 1 can be formed, for example, by crystallizing the zeolite into a membrane form on the surface of the support through hydrothermal synthesis.
Fig. 2 schematically illustrates a part A in Fig. 1. The part A in Fig. 1 is a part which is of the membrane composite 1 in a cross-sectional direction and which includes the zeolite membrane 12. The zeolite membrane 12 is a part formed from the surface of the support 11 toward the outer side of the support 11. A line L0 in Fig. 2 represents the position of a surface of the zeolite membrane 12. The zeolite membrane 12 is constituted by crystals of the zeolite. The crystals of the zeolite which constitute the zeolite membrane 12 have specific orientation.
The support 11 is an inorganic porous body, and is, for example, a porous body made of alumina. A line L1 in Fig. 2 represents the position of the boundary between the zeolite membrane 12 and the support 11. In a first surface layer part 11A, which is a part at or in the immediate vicinity of the surface of the support 11, the crystals of the zeolite penetrate to gaps in the support 11. The zeolite in the first surface layer part 11A has orientation that is comparable to or slightly lower than that of the zeolite in the zeolite membrane 12.

Also in a second surface layer part 11B, which is a part that is in the vicinity of the surface of the support 11 and that is located deeper than the first surface layer part 11A, the crystals of the zeolite penetrate to gaps in the support 11. The zeolite in the second surface layer part 11B has arbitrary orientation that differs from the orientation of the zeolite in the zeolite membrane 12. A line L2 in Fig. 2 represents the boundary between the zeolite which exhibits the specific orientation and the zeolite which exhibits the arbitrary orientation.

The zeolite does not penetrate to the inside part 11C of the support 11. A line L3 in Fig. 2 represents a depth in the support to which the zeolite penetrates. In this manner, the zeolite not only constitutes the zeolite membrane 12 but also penetrates to the inside of the support 11, and the orientation thereof also varies in the thickness direction of the support 11.

[Orientation]

In the present embodiment, in an X-ray diffraction pattern obtained by irradiating the surface of the zeolite membrane with X-rays at the minimum incident angle that allows the X-rays to pass through the zeolite membrane, an integrated intensity of a peak at or around $2\theta=9.6°$ is 6.0 times or more an integrated intensity of a peak at or around $2\theta=20.8°$.

In the present specification, the term "X-ray diffraction pattern" means a diffraction pattern obtained by irradiating the surface of the zeolite membrane with the X-rays of which a radiation source is CuKα, with a scanning axis set to θ/2θ. In measurement of the X-ray diffraction pattern, in a case where a surface of the zeolite membrane composite (surface of the zeolite membrane) is a curved surface, an irradiation width may be fixed with use of an automatic variable slit. The X-ray diffraction pattern obtained with use of the automatic variable slit means a pattern obtained by carrying out a variable-to-stationary slit correction.

In the present specification, the "integrated intensity of a peak" is a value calculated by the method described in the examples. The phrase "peak at or around $2\theta=9.6°$" means the highest one of peaks which are present in the range of $9.6°\pm0.6°$, among peaks which are not derived from the support. The phrase "peak at or around $2\theta=20.8°$" means the highest one of peaks which are present in the range of $20.8°\pm0.6°$, among the peaks which are not derived from the support. The phrase "peak at or around $2\theta=16.2°$" means the highest one of peaks which are present in the range of $16.2°\pm0.6°$, among the peaks which are not derived from the support.

In the present embodiment, the shape of a sample in the measurement of the X-ray diffraction pattern may be any shape that allows irradiation of the surface of the zeolite membrane of the membrane composite with the X-rays. For example, the shape of the sample may be the shape of the membrane composite itself, or may be a shape obtained by cutting the membrane composite to an appropriate size required by a measurement device.

The "minimum incident angle that allows the X-rays to pass through the zeolite membrane" is the irradiation angle of the X-rays at which peaks specific to the zeolite membrane are detected in a case where the irradiation angle of the X-rays is varied with respect to the zeolite membrane, and is the irradiation angle of the X-rays at one of the following timings in a case where the irradiation angle of the X-rays is varied with respect to the zeolite membrane.

· A timing at which a peak specific to the support is no longer detected; and
· A timing at which a peak specific to the support is detected for the first time.

Xr1 in Fig. 1 represents the X-rays with which the zeolite membrane 12 is irradiated at this time, and the minimum incident angle is indicated by θ1 in Fig. 1. Note that the irradiation angle of the X-rays can be defined such that, in a case where the irradiation angle of the X-rays is varied with respect to the zeolite membrane, the irradiation angle when a peak derived from the zeolite membrane is no longer detected is 0°.

In a case where (i) the irradiation with the X-rays is carried out at the minimum incident angle and (ii) asymmetric reflection measurement is carried out at a fixed incident angle, the X-ray diffraction pattern shows the orientation of the crystals of the zeolite in the zeolite membrane which is a part present on the outer side of the interface between the support and the zeolite membrane. Therefore, that the ratio of a peak indicating the specific orientation of the crystals of the zeolite is high means that, among the crystals of the zeolite constituting the zeolite membrane, a large proportion of the crystals of the zeolite in the zeolite membrane 12 are oriented in the specific direction, i.e., the orientation of the crystals of the zeolite in the zeolite membrane 12 is high, which in turn means high separation performance.

The peak at or around $2\theta=9.6°$ in the X-ray diffraction pattern is a peak derived from planes with an index of (1, 0, 0) in a CHA structure when it is assumed that a space group using rhombohedral setting is (No. 166), according to COLLECTION OF SIMULATED XRD POWDER PATTERNS FOR ZEOLITE Fourth Revised Edition 2001 ELSEVIER. The peak at or around $2\theta=20.8°$ in the X-ray diffraction pattern is a peak derived from planes with an index of (2, 0, -1) in the CHA structure when it is assumed that the space group using the rhombohedral setting is (No. 166), according to COLLECTION OF SIMULATED XRD POWDER PATTERNS FOR ZEOLITE Fourth Revised Edition 2001 ELSEVIER.

A peak at or around $2\theta=16.2°$ in the X-ray diffraction pattern is a peak derived from planes with an index of (1, -1, 1) in the CHA structure when it is assumed that the space group using the rhombohedral setting is (No. 166), according to COLLECTION OF SIMULATED XRD POWDER PATTERNS FOR ZEOLITE Fourth Revised Edition 2001 ELSEVIER.

Note that, in the present specification, the phrase "peak at or around $2\theta=9.6°$" means the highest one of the peaks which are present in the range of $9.6°\pm0.6°$, among the peaks which are not derived from the support. Similarly, the phrase "peak at or around $2\theta=20.8°$" means the highest one of the peaks which are present in the range of $20.8°\pm0.6°$, among the peaks which are not derived from the support, and the phrase "peak at or around $2\theta=16.2°$" means the highest one of the peaks which are present in the range of $16.2°\pm0.6°$, among the peaks that are not derived from the support.

In the X-ray diffraction pattern obtained by the irradiation with the X-rays at the minimum incident angle, a high ratio of the integrated intensity of the peak at or around $2\theta=9.6°$ to the integrated intensity of the peak at or around $2\theta=20.8°$ is considered to mean that, for example, a larger number of crystals of the zeolite are oriented and grow such that the (1, 0, 0) planes in the CHA structure in the rhombohedral setting are oriented almost parallel to the surface of the membrane composite. From the perspective of increase in separation performance of the zeolite membrane and obtainment of a dense zeolite membrane, it is advantageous that the crystals of the zeolite are oriented and grow in the membrane composite. From such perspectives, the above ratio is preferably higher, typically 6.0 times or more, preferably 6.3 times or more, more preferably 6.5 times or more, even more preferably 6.7 times or more, and particularly preferably 7.0 times or more. The upper limit of the above ratio can be determined, as appropriate, from the perspective of sufficient achievement of the effects in the above perspectives, and may be, for example, 100 times or less.

In the X-ray diffraction pattern obtained by the irradiation with the X-rays at the minimum incident angle, a high ratio of the integrated intensity of the peak at or around $2\theta=9.6°$ to an integrated intensity of the peak at or around $2\theta=16.2°$ is considered to mean that, for example, a larger number of crystals of the zeolite are oriented and grow such that the (1, 0, 0) planes in the CHA structure in the rhombohedral setting are oriented almost parallel to the surface of the membrane composite. From the perspective of increase in separation performance of the zeolite membrane and obtainment of a dense zeolite membrane, it is advantageous that the crystals of the zeolite are oriented and grow in the membrane composite. From such perspectives, the above ratio is preferably higher, typically 6.0 times or more, preferably 6.5 times or more, more preferably 7.0 times or more, even more preferably 7.5 times or more, particularly preferably 8.0 times or more, and most preferably 10.0 times or more. In this range, the ratio is preferably 20.0 times or more, more preferably 25.0 times or more, and even more preferably 30.0 or more. The upper limit of the above ratio can be determined, as appropriate, from the perspective of sufficient achievement of the effects in the above perspectives, and may be, for example, 100 times or less.

The integrated intensities of the peaks in the X-ray diffraction pattern obtained by the irradiation with the X-rays at the minimum incident angle can be measured by grazing incidence X-ray diffraction (GIXD). The integrated intensities of the peaks can be adjusted by changing a condition for forming the zeolite membrane and can be adjusted, for example, by changing the amount of adhering seed crystals during formation of the zeolite membrane through hydrothermal synthesis.

In the X-ray diffraction pattern obtained by the irradiation with the X-rays at the minimum incident angle, only a measurement result on the zeolite membrane 12 in Fig. 2 (i.e., a part from the line L0 to the line L1 in Fig. 2) is substantially obtained. The X-ray diffraction pattern does not include measurement results on the first surface layer part 11A, in which the crystals of the zeolite penetrate to the gaps in the support 11, the second surface layer part 11B, in which the other orientations of the zeolite are predominate, and the inside part 11C, which does not contain the zeolite. Therefore, the X-ray diffraction pattern makes it possible to obtain information on the orientation in the zeolite membrane 12, which has the greatest effect on production of a purified component (separation or concentration of a mixture), and the level of the separation performance of the membrane composite can be predicted more accurately.

Note that the integrated intensities of the peaks in the X-ray diffraction pattern obtained by the irradiation with the X-rays at the minimum incident angle are values obtained from measurement carried out at at least one location on the membrane.

In the present embodiment, it is preferable that, in an X-ray diffraction pattern obtained by irradiating the surface of the zeolite membrane with X-rays that reach the inorganic porous support, an integrated intensity of a peak at or around $2\theta=17.9°$ is less than 0.5 times an integrated intensity of a peak at or around $2\theta=20.8°$, and an integrated intensity of a peak at or around $2\theta=9.6°$ is 2.0 times or more but less than 6.0 times the integrated intensity of the peak at or around $2\theta=20.8°$. The phrase "X-ray diffraction pattern obtained by irradiating the surface of the zeolite membrane with X-rays that reach the inorganic porous support" means an X-ray diffraction pattern obtained by irradiating the surface of the zeolite membrane with X-rays at an incident angle larger than the above-described minimum incident angle. In the present embodiment, the phrase means a result of symmetric reflection measurement through $\theta/2\theta$ measurement. Xr2 in Fig. 1 represents the X-rays with which the zeolite membrane 12 is irradiated at this time, and the incident angle is indicated by $\theta2$ in Fig. 1.

The peak at or around $2\theta=17.9°$ in the X-ray diffraction pattern is a peak derived from planes with an index of (1, 1, 1) in the CHA structure when it is assumed that the space group using the rhombohedral setting is (No. 166), according to COLLECTION OF SIMULATED XRD POWDER PATTERNS FOR ZEOLITE Fourth Revised Edition 2001 ELSEVIER. Note that, in the present specification, the phrase "peak at or around $2\theta=17.9°$" means the highest one of peaks which are present in the range of $17.9°\pm0.6°$, among the peaks that are not derived from the support.

In a case where, in the X-ray diffraction pattern obtained by irradiating the surface of the zeolite membrane with the X-rays that reach the inorganic porous support, the integrated intensity of the peak at or around $2\theta=17.9°$ is less than 0.5 times the integrated intensity of the peak at or around $2\theta=20.8°$ and the integrated intensity of the peak at or around $2\theta=9.6°$ is 2.0 times or more but less than 8.0 times the integrated intensity of the peak at or around $2\theta=20.8°$, the ratio of the integrated intensity of the peak at or around $2\theta=17.9°$ to the integrated intensity of the peak at or around $2\theta=20.8°$ in the X-ray diffraction pattern obtained by the irradiation with the X-rays that reach the support indicates that the zeolite crystals in the zeolite membrane are sufficiently oriented and grow, resulting in formation of a dense zeolite membrane having high separation performance. From the perspective of formation of a dense zeolite membrane having high separation performance, the ratio of the integrated intensity of the peak at or around $2\theta=17.9°$ to the integrated intensity of the peak at or around $2\theta=20.8°$ in the X-ray diffraction pattern obtained by the irradiation with the X-rays that reach the support is more preferably 0.45 or less. The lower limit of the ratio can be determined, as appropriate, from the perspective of sufficient achievement of the effect in the above perspective, and may be, for example, 0.001 or more.

Moreover, in the present embodiment, in a case where, in the X-ray diffraction pattern obtained by irradiating the surface of the zeolite membrane with the X-rays that reach the inorganic porous support, the integrated intensity of the peak at or around $2\theta=17.9°$ is less than 0.5 times the integrated intensity of the peak at or around $2\theta=20.8°$ and the integrated intensity of the peak at or around $2\theta=9.6°$ is 2.0 times or more but less than 8.0 times the integrated intensity of the peak at or around $2\theta=20.8°$, the ratio of the integrated intensity of the peak at or around $2\theta=9.6°$ to the integrated intensity of the peak at or around $2\theta=20.8°$ in the X-ray diffraction pattern obtained by irradiating the surface of the zeolite membrane with the X-rays that reach the inorganic porous support preferably has a higher lower limit and a lower upper limit, from the perspective of formation of a dense zeolite membrane having high separation performance. For example, from the above perspective, the ratio of the integrated intensity of the peak at or around $2\theta=9.6°$ to the integrated intensity of the peak at or around $2\theta=20.8°$ in the X-ray diffraction pattern obtained by the irradiation with the X-rays that reach the support is more preferably 2.1 or more, even more preferably 2.3 or more, and still more preferably 2.5 or more. Furthermore, from the above perspective, the ratio is more preferably 7.5 or less, even more preferably 7.3 or less, and still more preferably 7.0 or less.

In the present embodiment, it is preferable that, in the X-ray diffraction pattern obtained by irradiating the surface of the zeolite membrane with the X-rays that reach the inorganic porous support, a peak intensity of the peak at or around $2\theta=17.9°$ is less than 0.5 times a peak intensity of the peak at or around $2\theta=20.8°$, and a peak intensity of the peak at or around $2\theta=9.6°$ is 2.0 times or more but less than 4.0 times the peak intensity of the peak at or around $2\theta=20.8°$.

In a case where, in the X-ray diffraction pattern obtained by irradiating the surface of the zeolite membrane with the X-rays that reach the inorganic porous support, the peak intensity of the peak at or around $2\theta=17.9°$ is less than 0.5 times the peak intensity of the peak at or around $2\theta=20.8°$ and the peak intensity of the peak at or around $2\theta=9.6°$ is 2.0 times or more but less than 4.0 times the peak intensity of the peak at or around $2\theta=20.8°$, the ratio of the integrated intensity of the peak at or around $2\theta=17.9°$ to the peak intensity of the peak at or around $2\theta=20.8°$ in the X-ray diffraction pattern obtained by the irradiation with the X-rays that reach the support indicates that the zeolite crystals in the zeolite membrane are sufficiently oriented and grow, resulting in formation of a dense zeolite membrane having high separation performance. From the perspective of formation of a dense zeolite membrane having high separation performance, the ratio of the peak intensity of the peak at or around $2\theta=17.9°$ to the peak intensity of the peak at or around $2\theta=20.8°$ in the X-ray diffraction pattern obtained by irradiation with the X-rays that reach the support is more preferably 0.45 or less. The above ratio is even more preferably 0.43 or less, and particularly preferably 0.41 or less. The lower limit of the ratio can be determined, as appropriate, from the perspective of sufficient achievement of the effect in the above perspective, and may be, for example, 0.001 or more.

In a case where, in the X-ray diffraction pattern obtained by irradiating the surface of the zeolite membrane with the X-rays that reach the inorganic porous support, the peak intensity of the peak at or around $2\theta=17.9°$ is less than 0.5 times the peak intensity of the peak at or around $2\theta=20.8°$ and the peak intensity of the peak at or around $2\theta=9.6°$ is 2.0 times or more but less than 4.0 times the peak intensity of the peak at or around $2\theta=20.8°$, the ratio of the peak intensity of the peak at or around $2\theta=9.6°$ to the peak intensity of the peak at or around $2\theta=20.8°$ in the X-ray diffraction pattern obtained by irradiating the surface of the zeolite membrane with the X-rays that reach the inorganic porous support preferably has a higher lower limit and a lower upper limit, from the perspective of formation of a dense zeolite membrane having high separation performance. For example, from the above perspective, the ratio of the peak intensity of the peak at or around $2\theta=9.6°$ to the peak intensity of the peak at or around $2\theta=20.8°$ in the X-ray diffraction pattern obtained by the irradiation with the X-rays that reach the support is more preferably 2.1 or more, even more preferably 2.3 or more, and still more preferably 2.5 or more. Furthermore, from the above perspective, the ratio is more preferably 3.9 or less, even more preferably 3.8 or less, and still more preferably 3.7 or less.

In the present embodiment, in the X-ray diffraction pattern obtained by irradiating the surface of the zeolite membrane with the X-rays that reach the inorganic porous support, the integrated intensity of the peak at or around $2\theta=17.9°$ may be 0.5 times or more the integrated intensity of the peak at or around $2\theta=20.8°$, or the integrated intensity of the peak at or around $2\theta=9.6°$ may be 6.0 times or more the integrated intensity of the peak at or around $2\theta=20.8°$.

In a case where, in the X-ray diffraction pattern obtained by irradiating the surface of the zeolite membrane with the X-rays that reach the inorganic porous support, the integrated intensity of the peak at or around 2θ=17.9° is 0.5 times or more the integrated intensity of the peak at or around 2θ=20.8° or the integrated intensity of the peak at or around 2θ=9.6° is 8.0 times or more the integrated intensity of the peak at or around 2θ=20.8°, the ratio of the integrated intensity of the peak at or around 2θ=17.9° to the integrated intensity of the peak at or around 2θ=20.8° in the X-ray diffraction pattern obtained by the irradiation with the X-rays that reach the support indicates that the zeolite crystals in the zeolite membrane are oriented very well and grow, resulting in formation of a dense zeolite membrane having high separation performance.

In this case, from the perspective of formation of a dense zeolite membrane having high separation performance, the ratio of the integrated intensity of the peak at or around 2θ=17.9° to the integrated intensity of the peak at or around 2θ=20.8° in the X-ray diffraction pattern obtained by the irradiation with the X-rays that reach the support is preferably 0.5 or more, more preferably 0.8 or more, even more preferably 1.0 or more, particularly preferably 1.2 or more, and most preferably 1.5 or more. The upper limit of the ratio can be determined, as appropriate, from the perspective of sufficient achievement of the effect in the above perspective, and may be, for example, 1,000 or less.

In this case, from the perspective of formation of a dense zeolite membrane having high separation performance, the ratio of the integrated intensity of the peak at or around 2θ=9.6° to the integrated intensity of the peak at or around 2θ=20.8° in the X-ray diffraction pattern obtained by the irradiation with the X-rays that reach the support is preferably 8.0 times or more, more preferably 8.5 or more, and even more preferably 9.0 or more. The upper limit of the ratio can be determined, as appropriate, from the perspective of sufficient achievement of the effect in the above perspective, and may be, for example, 1,000 or less.

In the present embodiment, in the X-ray diffraction pattern obtained by irradiating the surface of the zeolite membrane with the X-rays that reach the inorganic porous support, the peak intensity of the peak at or around 2θ=17.9° may be 0.5 times or more the peak intensity of the peak at or around 2θ=20.8°, or the peak intensity of the peak at or around 2θ=9.6° may be 4.0 times or more the peak intensity of the peak at or around 2θ=20.8°.

In this case, in the X-ray diffraction pattern obtained by irradiating the surface of the zeolite membrane with the X-rays that reach the inorganic porous support, the peak intensity of the peak at or around 2θ=9.6° is preferably 4.0 times or more the peak intensity of the peak at or around 2θ=20.8°, from the perspective of formation of a dense zeolite membrane having high separation performance. From the above perspective, the ratio of the peak intensity of the peak at or around 2θ=9.6° to the peak intensity of the peak at or around 2θ=20.8° in the X-ray diffraction pattern obtained by the irradiation with the X-rays that reach the support is more preferably 4.1 or more, even more preferably 4.2 or more, and still more preferably 4.5 or more. The upper limit of the ratio can be determined, as appropriate, from the perspective of sufficient achievement of the effect in the above perspective, and may be, for example, 1,000 or less.

In this case, in the X-ray diffraction pattern obtained by irradiating the surface of the zeolite membrane with the X-rays that reach the inorganic porous support, the peak intensity of the peak at or around 2θ=17.9° is preferably 0.5 times or more the integrated intensity of the peak at or around 2θ=20.8°, from the perspective of formation of a dense zeolite membrane having high separation performance. From the above perspective, the ratio of the peak intensity of the peak at or around 2θ=17.9° to the peak intensity of the peak at or around 2θ=20.8° in the X-ray diffraction pattern obtained by the irradiation with the X-rays that reach the support is more preferably 0.5 or more, even more preferably 0.6 or more, and particularly preferably 0.65 or more. The upper limit of the ratio can be determined, as appropriate, from the perspective of sufficient achievement of the effect in the above perspective, and may be, for example, 1,000 or less.

The ratios of the integrated intensities and the peak intensities of the peaks in the X-ray diffraction pattern obtained by the irradiation with the X-rays that reach the support can be determined with use of a known X-ray diffraction device that can measure X-ray diffraction on a tubular or curved surface. The ratios of the integrated intensities of the peaks can be adjusted by changing a condition for the hydrothermal synthesis through which the zeolite membrane is formed, as described later. For example, the ratios can be achieved and adjusted by, in the hydrothermal synthesis, (i) using a specific organic template, (ii) using an aqueous reaction composition having a relatively high $SiO_2/Al_2O_3$ molar ratio, and (ii) causing $K^+$ ions to coexist in an aqueous reaction mixture. Additionally, the ratios can also be adjusted by changing an Na/K ratio or the ratio of Na or K to Al in the aqueous reaction mixture or by changing the amount of the seed crystals adhered to the support in advance.

[Membrane thickness]

The thickness of the zeolite membrane of the present embodiment is not particularly limited, but is typically 0.1 μm or more, preferably 0.6 μm or more, and more preferably 1.0 μm or more. The zeolite membrane having a thickness equal to or greater than the above lower limit allows a further improvement in strength of the membrane composite. Further, the thickness of the zeolite membrane is not particularly limited, but is typically 100 μm or less, preferably 60 μm or less, and more preferably 20 μm or less. In a case where the membrane composite is used for separation of gasses, the thickness is preferably even thinner. Thus, in this case, the thickness of the zeolite membrane is even more preferably 10 μm or less, still more preferably 5 μm or less, particularly preferably 4 μm or less, and most preferably 3.5 μm or less. The

zeolite membrane having a thickness equal to or less than the above upper limit allows a further improvement in permeation performance of the membrane composite.

The thickness of the zeolite membrane can be measured by the method described in the examples described later.

[Defect amount]

In the present embodiment, the $CF_4$ permeance or $SF_6$ permeance of the membrane composite indicates the amount of defects in the zeolite membrane. A defect is a gap between zeolite grains, and is, for example, a crack caused by thermal expansion or a grain boundary that remains due to insufficient growth of the zeolite grains. In a case where the type of the zeolite constituting the zeolite membrane is a CHA-type zeolite described later, the $CF_4$ permeance of the membrane composite is typically $5.0 \times 10^{-9}$ mol/(m²·s·Pa) or less, preferably $3.5 \times 10^{-9}$ mol/(m²·s·Pa) or less, more preferably $3.0 \times 10^{-9}$ mol/(m²·s·Pa) or less, even more preferably $1.5 \times 10^{-9}$ mol/(m²·s·Pa) or less, particularly preferably $1.0 \times 10^{-9}$ mol/(m²·s·Pa), and most preferably $5.0 \times 10^{-10}$ mol/(m²·s·Pa) or less. Among these, the $CF_4$ permeance may be $1 \times 10^{-10}$ mol/(m²·s·Pa) or less, preferably $5.0 \times 10^{-11}$ mol/(m²·s·Pa) or less, and more preferably $3.0 \times 10^{-11}$ mol/(m²·s·Pa) or less. In a case where the type of the zeolite is a CHA-type zeolite described later, the $SF_6$ permeance of the membrane composite is typically $5.0 \times 10^{-9}$ mol/(m²·s·Pa) or less, preferably $3.5 \times 10^{-9}$ mol/(m²·s·Pa) or less, more preferably $3.0 \times 10^{-9}$ mol/(m²·s·Pa) or less, even more preferably $1.5 \times 10^{-9}$ mol/(m²·s·Pa) or less, particularly preferably $1.0 \times 10^{-9}$ mol/(m²·s·Pa) or less. Among these, the $SF_6$ permeance may be $1 \times 10^{-10}$ mol/(m²·s·Pa) or less, preferably $5.0 \times 10^{-11}$ mol/(m²·s·Pa) or less, and more preferably $3.0 \times 10^{-11}$ mol/(m²·s·Pa) or less. In a case where the $CF_4$ permeance or $SF_6$ permeance of the membrane composite falls within the above numerical range, the defects present in the membrane composite are reduced, and therefore the membrane composite has more excellent separation performance. Note that the above values may be values for the membrane composite with respect to which a modification, such as ion exchange treatment or silylation treatment, has not been carried out. The above $CF_4$ permeance or $SF_6$ permeance is a value obtained from single-gas measurement carried out under a condition that a measurement temperature is 50°C and the differential pressure between the inside and outside of the membrane is 0.1 MPa. Note that, unless otherwise specified, the other gas permeances are also each a value obtained from single-gas measurement carried out under a condition that a measurement temperature is 50°C and the differential pressure between the inside and outside of the membrane is 0.1 MPa.

A permeance with respect to a gas that hardly passes through zeolite pores, for example, $CH_4$ gas in the case of a CHA-type zeolite membrane may be used as an indicator of such a defect amount.

[Permeability coefficient]

While the $CF_4$ permeance or $SF_6$ permeance of the membrane composite can be regarded as the defect amount, it is further preferable to also take into account a membrane thickness related to the permeation resistance, in a case where the performance of the entire membrane composite is considered. Therefore, in the present embodiment, a $CF_4$ permeability coefficient or $SF_6$ permeability coefficient, which is the product of the $CF_4$ permeance or $SF_6$ permeance of the membrane composite and the membrane thickness of the zeolite membrane, may be employed as the indicator of the defect amount in the membrane composite.

In a case where the type of the zeolite constituting the zeolite membrane is a CHA-type zeolite described later, the $CF_4$ permeability coefficient of the membrane composite as the indicator of the defect amount in the membrane composite is typically $4.5 \times 10^{-8}$ (mol·μm)/(m²·s·Pa) or less, preferably $3.5 \times 10^{-8}$ (mol·μm)/(m²·s·Pa) or less, more preferably $3.0 \times 10^{-8}$ (mol·μm)/(m²·s·Pa) or less, even more preferably $2.0 \times 10^{-8}$ (mol·μm)/(m²·s·Pa) or less, particularly preferably $1.0 \times 10^{-8}$ (mol·μm)/(m²·s·Pa) or less, and most preferably $5.0 \times 10^{-9}$ (mol·μm)/ (m²·s·Pa).

The $SF_6$ permeability coefficient of the membrane composite is typically $4.5 \times 10^{-8}$ (mol·μm)/(m²·s·Pa) or less, preferably $3.5 \times 10^{-8}$ (mol·μm)/(m²·s·Pa) or less, more preferably $3.0 \times 10^{-8}$ (mol·μm)/(m²·s·Pa) or less, even more preferably $2.0 \times 10^{-8}$ (mol·μm)/(m²·s·Pa) or less, particularly preferably $1.0 \times 10^{-8}$ (mol·μm)/(m²·s·Pa) or less, and most preferably $5.0 \times 10^{-9}$ (mol·μm)/(m²·s·Pa).

In a case where the permeability coefficient of the membrane composite falls within such a numerical range, the defects present in the membrane composite are reduced, and therefore the membrane composite has more excellent separation performance. Note that the above values may be values for the membrane composite with respect to which a modification, such as ion exchange treatment or silylation treatment, has not been carried out.

As described above, in a case where the zeolite membrane is constituted by a CHA-type zeolite, the $CH_4$ permeability coefficient of the membrane composite as the indicator of the defect amount in the membrane composite may be $5.0 \times 10^{-7}$ mol·μm/(m²·s·Pa) or less, for the purpose of obtaining an estimate of the defect amount. The $CH_4$ permeability coefficient is preferably $1.0 \times 10^{-7}$ mol·μm/(m²·s·Pa) or less, more preferably $5.0 \times 10^{-8}$ mol·μm/(m²·s·Pa) or less, and even more preferably $3.0 \times 10^{-8}$ mol·μm/(m²·s·Pa) or less. The above $CF_4$ permeability coefficient or $SF_6$

permeability coefficient is calculated with use of a value obtained from single-gas measurement carried out under a condition that a measurement temperature is 50°C and the differential pressure between the inside and outside of the membrane is 0.1 MPa. Note that the other gas permeability coefficients can each be calculated similarly from the product of a permeance and the membrane thickness. In this case, the other gas permeability coefficients are each calculated with use of a value obtained from single-gas measurement carried out under a condition that a measurement temperature is 50°C and the differential pressure between the inside and outside of the membrane is 0.1 MPa, unless otherwise specified. For example, a methane permeability coefficient can also be calculated similarly. In this case, the methane permeability coefficient is calculated with use of a value obtained from single-gas measurement carried out under a condition that a measurement temperature is 50°C and the differential pressure between the inside and outside of the membrane is 0.1 MPa.

[Permeation performance of membrane composite]

The permeation performance of the membrane composite is indicated by a permeance $[mol \cdot (m^2 \cdot s \cdot Pa)^{-1}]$ with respect to a permeation component which passes through the zeolite membrane. In a case where carbon dioxide is caused to pass through the membrane composite at a temperature of 50°C and a differential pressure of 0.1 MPa, a $CO_2$ permeance is typically $3 \times 10^{-8}$ or more, preferably $6.0 \times 10^{-8}$, preferably $9.0 \times 10^{-8}$ or more, preferably $2.0 \times 10^{-7}$ or more, preferably $3.0 \times 10^{-7}$ or more, more preferably $5.0 \times 10^{-7}$ or more, even more preferably $7.0 \times 10^{-7}$ or more, and particularly preferably $1.0 \times 10^{-6}$ or more. The upper limit of the $CO_2$ permeance is not limited, and is typically $3.0 \times 10^{-4}$ or less.

As the properties of the membrane composite, it is preferable that the carbon dioxide permeance and the defect amount or the indicator of the defect amount respectively fall within the above-described ranges. By setting the defect amount or the indicator of the defect amount within the above range, the membrane composite can achieve both high separation performance and high processing capacity.

[Other properties]

The water adsorption capacity of the membrane composite of the present embodiment at a relative pressure of 0.8 as determined from a water vapor adsorption isotherm is preferably 2 times or more but 10 times or less the water adsorption capacity thereof at a relative pressure of 0.2. Note, here, that the "adsorption isotherm" is represented by a graph obtained by maintaining materials at a constant temperature and measuring changes in pressure and adsorption capacity. In general, the horizontal axis indicates a relative pressure (P/P0) obtained by dividing an equilibrium pressure by a saturated vapor pressure, and the relative pressure takes a value from 0 to 1. The vertical axis indicates a water adsorption capacity. In the present embodiment, the water (water vapor) adsorption capacities (g/g) of the composite membrane at a relative pressure of 0.8 and a relative pressure of 0.2 are used as indicators.

The above ratio of the water adsorption capacities generally correlates with adsorption of water to mesopores in the zeolite membrane. A higher ratio means that the volume of hydrophilic mesopores tends to be larger. A lower ratio means that the volume of the hydrophilic mesopores tends to be smaller. In a case where the ratio is excessively high, a large number of mesopores are present in the zeolite membrane. This may cause the zeolite membrane to have insufficient denseness, resulting in a tendency to a large permeation amount but low separation performance. In a case where the ratio is excessively low, almost no mesopores are present in the zeolite membrane. This causes the zeolite membrane to have high denseness, resulting in a tendency to high separation performance but a small permeation amount. From the perspective of increase in separation performance and permeation amount of the zeolite membrane, the above ratio is more preferably 2.1 or more and even more preferably 2.2 or more, and is more preferably 8 or less and even more preferably 5 or less.

The air permeation amount of the membrane composite is typically $10 \, L/(m^2 \cdot h)$ or more, preferably $20 \, L/(m^2 \cdot h)$ or more, more preferably $30 \, L/(m^2 \cdot h)$ or more, even more preferably $35 \, L/(m^2 \cdot h)$ or more, and particularly preferably $100 \, L/(m^2 \cdot h)$ or more. The upper limit of the permeation amount is not limited, but is preferably $1,000 \, L/(m^2 \cdot h)$ or less, more preferably $800 \, L/(m^2 \cdot h)$ or less, and even more preferably $700 \, L/(m^2 \cdot h)$ or less. The "air permeation amount" is described later, but is an air permeation amount $[L/(m^2 \cdot h)]$ in a case where the membrane composite is placed under atmospheric pressure and the inside of the membrane composite is connected to a vacuum line at 5 kPa.

The air permeation amount correlates with the gas permeation amount of the membrane composite. In a case where the air permeation amount of the membrane composite is large, the gas permeation amount of the membrane composite is also large. In a case where the air permeation amount is excessively large, however, the separation performance tends to be low. In the present embodiment, it is preferable that the air permeation amount of the membrane composite is reasonably large, the gas permeation amount of the membrane composite is large, and the membrane composite has good separation performance. Such a membrane composite has performance particularly suitable for separation of a gas component.

[Inorganic porous support]

To the inorganic porous support (support) in the present embodiment, the inorganic porous support disclosed in Patent Document 1 can be applied.

The support only needs to be made of a porous inorganic substance having chemical stability that allows crystallization of the zeolite in a membrane form on the surface etc. of the support. Specific examples of the support include: ceramic sintered bodies obtained from silica, $\alpha$-alumina, $\gamma$-alumina, mullite, zirconia, titania, yttria, silicon nitride, silicon carbide, or the like; sintered metals obtained from iron, bronze, stainless steel, or the like; and molded bodies of glass or carbon. The ceramic sintered bodies have an effect of increasing interfacial adhesiveness through partial zeolitization thereof during synthesis of the zeolite membrane. The support containing at least one of alumina, silica, and mullite is easy to subject to partial zeolitization. Therefore, such a support is more preferable because such a support bonds with the zeolite strongly, and a dense membrane having high separation performance is likely to be formed.

The shape of the support only needs be a shape that allows effective separation of a gas mixture or a liquid mixture. Specific examples of the shape include a flat-plate shape, a tubular shape, a cylindrical shape, a monolithic shape having many columnar or prismatic pores, and a honeycomb shape having many columnar or prismatic pores.

The pore size of pores included in the support is preferably controlled. The pore size is typically 0.02 $\mu$m or more, preferably 0.05 $\mu$m or more, and more preferably 0.1 $\mu$m or more, and is typically 20 $\mu$m or less, preferably 10 $\mu$m or less, and more preferably 5 $\mu$m or less. In a case where the pore size is excessively small, the permeation amount tends to decrease. In a case where the pore size is excessively large, the strength of the support itself tends to be insufficient, and a dense zeolite membrane tends to be difficult to form. The pore size may be an average pore size, and the average pore size can be measured by mercury porosimetry.

The surface of the support may be polished with use of a file or the like, as necessary. Note that the surface of the support means a surface part of the support on which the zeolite membrane is formed.

Typically, the porosity of the support is preferably 20% or more but 60% or less. The porosity affects a permeation flow rate when a gas or a liquid is separated. In a case where the porosity is less than the above lower limit, diffusion of permeation matter tends to be inhibited. In a case where the porosity is more than the above upper limit, the strength of the support tends to be decrease. The porosity of the support can be measured by mercury porosimetry.

[Zeolite membrane]

The zeolite membrane disclosed in Patent Document 1 can be applied to the zeolite membrane in the present embodiment, provided that the zeolite membrane has specific properties as described above.

In the present embodiment, the components constituting the zeolite membrane may include, as necessary, an inorganic binder such as silica or alumina, an organic substance such as a polymer, or a silylation agent for modifying a zeolite surface, in addition to the zeolite.

The zeolite membrane may partially contain an amorphous component or the like. However, the zeolite membrane is preferably constituted substantially only by the zeolite.

The proportion of a CHA-type aluminosilicate contained in the zeolite membrane is typically 10% by volume or more, preferably 30% by volume or more, more preferably 60% by volume or more, and even more preferably 80% by volume or more. The zeolite membrane is most preferably constituted only by a CHA-type aluminosilicate, because the zeolite membrane has the most excellent gas permeability and separability.

The thickness of the zeolite membrane is typically 0.1 $\mu$m or more, preferably 0.6 $\mu$m or more, and more preferably 1.0 $\mu$m or more. The thickness of the zeolite membrane falls within the range of typically 100 $\mu$m or less, preferably 60 $\mu$m or less, and more preferably 20 $\mu$m or less. In a case where the thickness of the zeolite membrane is excessively thick, the permeation amount of the zeolite membrane tends to decrease. In a case where the thickness of the zeolite membrane is excessively thin, the selectivity of the zeolite membrane tends to decrease or the membrane strength of the zeolite membrane tends to decrease.

In a case where the grain size of the zeolite that forms the zeolite membrane is excessively small, the permeability, selectivity, and the like of the zeolite membrane tend to decrease due to, for example, increase in grain boundary. Therefore, the grain size is typically 30 nm or more, preferably 50 nm or more, and more preferably 100 nm or more. The upper limit of the grain size is equal to or less than the thickness of the membrane. Furthermore, the grain size of the zeolite is more preferably the same as the thickness of the membrane. In a case where the grain size of the zeolite is the same as the thickness of the membrane, the grain boundary of the zeolite is the smallest. The zeolite membrane obtained through the hydrothermal synthesis described later is preferable because the grain size of the zeolite may be the same as the thickness of the membrane.

The shape of the zeolite membrane is not limited, and can be any shape such as a tubular shape, a hollow fiber shape, a monolithic shape, or a honeycomb shape. The size of the zeolite membrane is also not limited. For example, in the case of a tabular shape, the size of 2 cm or more but 200 cm or less in length, 0.5 cm or more but 2 cm or less in inner diameter, and 0.5 mm or more but 4 mm or less in thickness is typically practical and thus preferable.

<Zeolite>

In the present embodiment, the zeolite membrane preferably contains a CHA-type aluminosilicate zeolite. More preferably, the zeolite constituting the zeolite membrane is a CHA-type aluminosilicate. An aluminosilicate contains an oxide of Si and Al as a main component. This zeolite may contain an element other than Si, Al, and O, provided that the effect of the present invention is achieved.

The $SiO_2/Al_2O_3$ molar ratio (hereinafter also referred to as "SAR") of the zeolite membrane can be measured in a surface area or at a surface point of the zeolite membrane. Each measurement method is as described in the examples.

In the present embodiment, the SAR is preferably 6 or more but 500 less, in an SEM-EDX analysis at a surface point of the zeolite membrane. In a case where the SAR is excessively low, the denseness of the zeolite membrane may decrease, and also the durability of the zeolite membrane tends to decrease. From the perspective of the denseness and the durability of the zeolite membrane, the SAR of the zeolite membrane is preferably 10 or more, more preferably 20 or more, more preferably 30 or more, even more preferably 32 or more, even more preferably 35 or more, and particularly preferably 40 or more. The upper limit of the SAR is typically an SAR at which the amount of Al is substantially at the level of an impurity, and is preferably 100 or less, more preferably 90 or less, even more preferably 80 or less, particularly preferably 70 or less, and most preferably 50 or less.

In SEM-EDX measurement in a surface area of the zeolite membrane, a value differing from that obtained in the SEM-EDX analysis at a surface point may be obtained. From the perspective of the uniformity and variability of a sample, it is not considered that completely identical values are obtained. Also in the SEM-EDX measurement in a surface area, the preferable range of the SAR of the zeolite membrane may be similar to the above-described preferable range of the SAR of the zeolite membrane in the SEM-EDX analysis at a surface point.

The SAR of the zeolite membrane can be determined by scanning electron microscope-energy dispersive X-ray spectroscopy (SEM-EDX). In order to obtain information only on the range of a few microns in depth of a membrane, measurement is typically carried out at an X-ray acceleration voltage of 6 kV. The SAR of the zeolite membrane can be adjusted by changing a reaction condition for the hydrothermal synthesis described later.

<CHA-type zeolite>

In the present embodiment, the term "CHA-type zeolite" means a zeolite having a CHA structure, as defined by a code which specifies the structure of a zeolite and which is provided by the International Zeolite Association (IZA). The CHA-type zeolite is a zeolite having a crystal structure equivalent to that of naturally occurring chabazite. The CHA-type zeolite has a structure such that the CHA-type zeolite has three-dimensional pores which are constituted by eight-membered oxygen rings and which have a size of 0.38 nm $\times$ 0.38 nm, and the structure is characterized by X-ray diffraction data.

The framework density ($T/nm^3$) of the CHA-type zeolite is 14.5. The term "framework density ($T/nm^3$)" means the number of elements (T-elements) that constitute a framework and that differ from oxygen, per cubic nanometer (1,000 $Å^3$) of the zeolite. The framework density is determined by the structure of the zeolite. Note that the relationship between the framework density and the structure of the zeolite is shown in ATLAS OF ZEOLITE FRAMEWORK TYPES Fifth Revised Edition 2001 ELSEVIER.

[Method for producing zeolite membrane composite]

The zeolite membrane in the present embodiment can be produced by a method similar to the production method disclosed in Patent Document 1, except for the matters described below.

A method for forming the zeolite membrane in the present embodiment is not limited, provided that the method makes it possible to form the above-described specific zeolite membrane on the support. Examples of the method include: a method in which the zeolite is crystallized in a membrane form on the support; a method in which the zeolite is adhered to the support with use of an inorganic binder, an organic binder, or the like; a method in which a polymer containing the zeolite dispersed therein is adhered to the support; and a method in which the support is impregnated with a slurry of the zeolite and the zeolite is adhered to the support, in some cases, by suction. Among these, the method in which the zeolite is crystallized in a membrane form on the support is particularly preferable.

A method for crystallizing the zeolite is not limited, but preferable is a method in which the support is put in the reaction mixture (hereinafter also referred to as "aqueous reaction mixture") used in the hydrothermal synthesis to produce the zeolite and then the hydrothermal synthesis is directly carried out so that the zeolite is crystallized on the surface etc. of the support. Specifically, for example, the crystallization may be carried out by (i) putting the aqueous reaction mixture, of which the composition has been adjusted and homogenized, in a heat-resistant and pressure-resistant container, such as an autoclave, in which the support is gently fixed, (ii) sealing the container, and then (iii) heating the aqueous reaction mixture for a certain period of time.

The aqueous reaction mixture preferably contains an Si element source, an Al element source, an alkali source and water, and preferably further contains an organic template, as necessary.

Examples of the Si element source include amorphous silica, colloidal silica, silica gel, sodium silicate, amorphous aluminosilicate gel, tetraethoxysilane (TEOS), and trimethylethoxysilane.

Examples of the Al element source include sodium aluminate, aluminum hydroxide, aluminum sulfate, aluminum nitrate, aluminum oxide, and amorphous aluminosilicate gel.

By substituting Si in the zeolite framework with Al, it is possible to increase a polarity. This makes it possible to cause gas molecules having a high polarity to be actively adsorbed to and pass through the zeolite pores. In a case where the amount of Si substituted with Al decreases, the zeolite membrane comes to have a low polarity. This is advantageous for gas molecules having a low polarity to pass through the zeolite pores.

It is also possible to control the polarity by introducing Ga, Fe, B, Ti, Zr, Sn, or Zn as an element source other than the Al element source. A pore size is slightly affected by the atomic size of a metal species introduced into the zeolite framework. In a case where a metal having an atomic size smaller than that of silicon, specifically for example, boron (B) or the like is introduced, the pore size becomes small. In a case where a metal having an atomic size larger than that of silicon, specifically for example, tin (Sn) or the like is introduced, the pore size becomes large. Moreover, by removing an introduced metal from the framework through acid treatment, the pore size may be affected. By controlling an effective pore size, it is also possible to improve the separation performance.

The type of alkali used as the alkali source is not limited, and an alkaline metal hydroxide or an alkaline earth metal hydroxide can be used.

The metal species of the alkaline metal hydroxide or the alkaline earth metal hydroxide is typically Na, K, Li, Rb, Cs, Ca, Mg, Sr, Ba, or the like, preferably Na or K, and more preferably K. Two or more types of metal species may be used in combination. Specifically, Na and K or Li and K are preferably used in combination.

The alkali source can be, for example, an alkaline metal hydroxide such as sodium hydroxide, potassium hydroxide, lithium hydroxide, rubidium hydroxide, or cesium hydroxide, or can be alternatively an alkaline earth metal hydroxide such as calcium hydroxide, magnesium hydroxide, strontium hydroxide, or barium hydroxide. Alternatively, the alkali source can be hydroxide ions that are counter anions of the organic template described below.

The organic template (structure directing agent) is preferably used in the crystallization of the zeolite. Synthesizing the zeolite membrane with use of the organic template increases the SAR of the crystallized zeolite. This makes it possible to further increase the crystallinity of the zeolite membrane. The organic template only needs to be an organic template that can allow formation of a desired zeolite membrane. One type of organic template may be used alone, or two or more types of organic templates may be used in combination.

As the organic template, an amine or a quarternary ammonium salt is typically used. For example, the organic templates disclosed in the specification of U.S. Patent No. 4544538 and the specification of U.S. Patent Application Publication No. 2008/0075656 are preferable. Specific examples include cations derived from alicyclic amines, such as cations derived from 1-adamantanamine, cations derived from 3-quinuclidinal, and cations derived from 3-exo-aminonorbornene. Among these, cations derived from 1-adamantanamine are more preferable. In a case where a cation derived from 1-adamantanamine is used as the organic template, a CHA-type zeolite which can form a dense membrane crystallizes.

Among the cations derived from 1-adamantanamine, N,N,N-trialkyl-1-adamantanammonium cations are even more preferable. Three alkyl groups of each N,N,N-trialkyl-1-adamantanammonium cation are each independently typically an alkyl group, preferably a lower alkyl group, and more preferably a methyl group. The most preferable compound among the N,N,N-trialkyl-1-adamantanammonium cations is a N,N,N-trimethyl-1-adamantanammonium cation.

In addition, an N,N,N-trialkylbenzylammonium cation can also be used as the organic template. Also in this case, alkyl groups are each independently an alkyl group, preferably a lower alkyl group, and more preferably a methyl group. The most preferable compound among N,N,N-trialkylbenzylammonium cations is a N,N,N-trimethylbenzylammonium cation.

Such a cation is accompanied by an anion. Examples of such an anion include halogen ions, such as Cl⁻, Br⁻, and I⁻, hydroxide ions, acetate, sulfate, and carboxylate. Among these, a hydroxide ion is particularly suitably used to form the CHA-type zeolite. The hydroxide ion functions as an alkali source as described above.

The ratio of the Si element source and the Al element source in the aqueous reaction mixture is typically expressed as the molar ratio of oxides of the elements, i.e., the $SiO_2/Al_2O_3$ molar ratio. The $SiO_2/Al_2O_3$ ratio of the aqueous reaction mixture only needs to be a ratio that allows formation of the zeolite having the above-described SAR, and is typically 5 or more, preferably 20 or more, more preferably 30 or more, even more preferably 40 or more, particularly preferably 50 or more, and most preferably 60 or more. The upper limit of the $SiO_2/Al_2O_3$ ratio is typically 500 or less, preferably 200 or less, more preferably 150 or less, and even more preferably 140 or less. From the perspective of the crystallization of the CHA-type aluminosilicate zeolite which can form a dense membrane, the $SiO_2/Al_2O_3$ ratio of the aqueous reaction mixture preferably falls within this range.

The $SiO_2/Al_2O_3$ molar ratio of the aqueous reaction mixture preferably also falls within the preferable range described later, in relation to the $SiO_2/Al_2O_3$ molar ratio of the seed crystals.

The ratio of the silica source and the organic template in the aqueous reaction mixture is, in terms of the molar ratio of the organic template to $SiO_2$ (organic template/$SiO_2$ ratio), typically 0.005 or more, preferably 0.01 or more, and more preferably 0.02 or more, and is typically 1 or less, preferably 0.4 or less, and more preferably 0.2 or less. The organic template/$SiO_2$ ratio preferably falls within this range, from the perspective of generation of a dense zeolite membrane and from the perspective of strong acid resistance of the generated zeolite and unlikeliness of release of Al. The organic template/$SiO_2$ ratio preferably falls within the above range, particularly, from the perspective of formation of a dense and acid-resistant CHA-type aluminosilicate zeolite.

The ratio of the Si element source and the metal hydroxide in the aqueous reaction mixture is, in terms of an $M_{(2/n)}O/SiO_2$ (where M indicates an alkaline metal or an alkaline earth metal, and n indicates the valence of M, which is 1 or 2) molar ratio, typically 0.02 or more, preferably 0.04 or more, and more preferably 0.05 or more, and is typically 0.5 or less, preferably 0.4 or less, and more preferably 0.3 or less.

In a case where the zeolite membrane is formed from a CHA-type aluminosilicate, the alkaline metal preferably contains potassium (K), from the perspective of generation of a denser and more crystalline membrane. The molar ratio of K to the total of the alkaline metal and the alkaline earth metal is typically 0.01 or more, preferably 0.1 or more, and more preferably 0.3 or more. The upper limit of the molar ratio is typically 1 or less. Addition of K to the aqueous reaction mixture in which the above preferable range is satisfied is suitable, from the perspective of, as described above, controlling the integrated intensity of the peak at or around $2\theta=9.6°$ to 2.0 times or more but less than 6.0 times the integrated intensity of the peak at or around $2\theta=20.8°$ in the X-ray diffraction pattern obtained by irradiating the surface of the zeolite membrane with the X-rays that reach the inorganic porous support.

The ratio of the Si element source and the water in the aqueous reaction mixture is, in terms of the molar ratio of the water to $SiO_2$ ($H_2O/SiO_2$ molar ratio), typically 10 or more, preferably 30 or more, more preferably 40 or more, and particularly preferably 50 or more, and is typically 1,000 or less, preferably 500 or less, more preferably 200 or less, and particularly preferably 150 or less. The $H_2O/SiO_2$ molar ratio preferably falls within the above range, from the perspective of generation of a dense zeolite membrane.

The amount of the water is particularly important in generation of a dense zeolite membrane. A dense membrane tends to be more easily formed under a condition where the amount of the water is larger than that of the silica than under a general condition for a powder synthesis method. Generally, the amount of water when a powdery CHA-type aluminosilicate zeolite is synthesized is approximately 15 to 50 in terms of the $H_2O/SiO_2$ molar ratio. The $H_2O/SiO_2$ molar ratio is preferably high (50 or more but 1,000 or less), i.e., a condition where the amount of the water is large is preferably employed, from the following perspective. That is, in such a case, it is possible to prevent formation of the zeolite in a synthesis gel. As a result, accumulation of the crystals onto the support is prevented, and also the growth rate of the CHA-type aluminosilicate zeolite on the surface etc. of the support becomes constant. Accordingly, the zeolite membrane composite which is obtained by the crystallization of the zeolite in a dense membrane form and which has high separation performance is obtained.

Furthermore, addition of the seed crystals in the hydrothermal synthesis is preferable, from the perspective of promotion of the crystallization of the zeolite on the support. A method for adding the seed crystals is not limited, and may be a method in which the seed crystals are added to the aqueous reaction mixture as in the synthesis of a powdery zeolite or a method in which the seed crystals are previously adhered to the support. In a case where the membrane composite is produced, the seed crystals are preferably previously adhered to the support. By adhering the seed crystals to the support in advance, a dense zeolite membrane having good separation performance is likely to be generated.

The seed crystals used are not limited to any type, provided that the seed crystals are crystals of a zeolite which promotes the crystallization. However, for efficient crystallization, the seed crystals preferably have the same crystal form as that of the crystals of the zeolite constituting the zeolite membrane to be formed. In a case where the zeolite membrane of a CHA-type aluminosilicate is formed, seed crystals of a CHA-type zeolite are preferably used.

The grain size of the seed crystals is preferably a grain size which allows the seed crystals to be held on the support so that dropping can be prevented during the hydrothermal synthesis and which does not allow the seed crystals to abundantly enter the inside of the support. The grain size of the seed crystals is, in terms of the average grain size measured by a laser diffraction grain size distribution measurement device, typically 0.5 nm or more, preferably 100 nm or more, and more preferably 500 nm or more, and is typically 5 $\mu$m or less, preferably 3 $\mu$m or less, and more preferably 2 $\mu$m or less.

A method for adhering the seed crystals to the support is not limited, and may be, for example, a dipping method in which the seed crystals are dispersed in a solvent such as water and then the support is immersed in an obtained slurry so that the seed crystals adhere to the surface of the support, or a method in which a slurry containing the seed crystals mixed with a solvent such as water is applied to the support. From the perspective of controlling the amount of the adhering seed crystals and producing the membrane composite reproducibly, the dipping method is more preferable.

A dispersion medium in the slurry of the seed crystals is not limited, but water or an alkaline aqueous solution is particularly preferable. The type of the alkaline aqueous solution is not limited, but an aqueous sodium hydroxide solution or an aqueous potassium hydroxide solution is preferable. These alkali species may be mixed. The alkali concentration in the dispersion medium is not limited, and is typically 0.0001 mol% or more, preferably 0.0002 mol% or more, more preferably 0.001 mol% or more, and even more preferably 0.002 mol% or more. The alkali concentration is typically 1 mol% or less, preferably 0.8 mol% or less, more preferably 0.5 mol% or less, and even more preferably 0.2 mol% or less.

The amount of the seed crystals, which are a dispersoid in the slurry of the seed crystals, is not limited, and is typically 0.01% by mass or more, preferably 0.02% by mass or more, and more preferably 0.05% by mass or more, with respect to the total mass of a dispersion liquid. The amount of the seed crystals is typically 20% by mass or less, preferably 10% by mass or less, more preferably 5% by mass or less, and even more preferably 2% by mass or less. In a case where the amount of the seed crystals dispersed is equal to or more than the above lower limit, the amount of the seed crystals adhering to the support does not become excessively small, and it is possible to prevent the surface of the support from partially having a site on which the zeolite is not generated during the hydrothermal synthesis. Therefore, a defective membrane is unlikely to be formed. In a case where the amount of the seed crystals in the dispersion liquid is equal to or less than the above upper limit, it is possible to reduce the possibility that the seed crystals which are not held on the support may drop during the hydrothermal synthesis, promote the growth of the zeolite crystals in the synthesis gel, and inhibit the growth of the zeolite membrane.

Note that it is preferable that the zeolite membrane is formed after the seed crystals are adhered to the support by the dipping method or application of the slurry and then the support is dried.

The amount of the seed crystals adhered to the support in advance is not limited, and is, in terms of mass per square meter of the base material, typically 0.01 g or more, preferably 0.05 g or more, and more preferably 0.5 g or more, and is typically 100 g or less, preferably 50 g or less, more preferably 10 g or less, and even more preferably 3 g or less. In a case where the amount of the seed crystals is less than the above lower limit, the crystals are unlikely to be formed, and the growth of the zeolite membrane tends to be insufficient or the growth of the zeolite membrane tends to be ununiform. In a case where the amount of the seed crystals exceeds the above upper limit, the roughness of the surface of the support may be augmented by the seed crystals, or spontaneous nuclei is likely to grow due to the seed crystals which have dropped from the surface of the support and the growth of the membrane on the support may be inhibited. In each case, a dense zeolite membrane tends to be difficult to generate.

In particular, it is effective that the amount of the seed crystals adhering to the support is maximized within the range in which dropping of the seed crystals during the synthesis can be prevented, from the perspective of thinning of the membrane thickness and from the perspective of increase in ratio of the integrated intensity of the peak at or around $2\theta=9.6°$ to the integrated intensity of the peak at or around $2\theta=20.8°$ in the X-ray diffraction pattern obtained by irradiation with the X-rays at the minimum incident angle that allows the X-rays to pass through the zeolite membrane.

The $SiO_2/Al_2O_3$ molar ratio of the seed crystals only needs to be a ratio that allows formation of the zeolite having the above-described SAR, and is typically 15 or more, preferably 18 or more, more preferably 20 or more, even more preferably 21 or more, particularly preferably 23 or more, and most preferably 25 or more. The upper limit thereof is typically 500 or less, preferably 70 or less, more preferably 50 or less, and even more preferably 40 or less. From the perspective of the crystallization of the CHA-type aluminosilicate zeolite which can form a dense membrane, the $SiO_2/Al_2O_3$ ratio of the seed crystals preferably falls within this range.

A method for fixing the support in the hydrothermal synthesis is not limited, and any method, such as vertical setting or horizontal setting, can be selected. In this case, the zeolite membrane may be formed by a stationary method, or the zeolite membrane may be formed while the aqueous reaction mixture is stirred.

The temperature when the zeolite membrane is formed is not limited, but is typically 100°C or higher, preferably 120°C or higher, and even more preferably 150°C or higher, and is typically 200°C or lower, preferably 190°C or lower, and even more preferably 180°C or lower. In a case where the reaction temperature is excessively low, the crystallization of the zeolite may become difficult. In a case where the reaction temperature is excessively high, crystals in a crystal form differing from an intended crystal form may be likely to be generated.

A heating (reaction) time is not limited, but is typically 1 hour or longer, preferably 5 hours or longer, and even more preferably 10 hours or longer, and is typically 10 days or shorter, preferably 5 days or shorter, more preferably 3 days or shorter, and even more preferably 1 day or shorter. In a case where the reaction time is excessively short, the crystallization of the zeolite may become difficult. In a case where the reaction time is excessively long, a large number of crystals may grow, and the permeation resistance may become high.

A combination of the heating temperature, the heating time, a heat-up time, and the $SiO_2/Al_2O_3$ molar ratio of the seed crystals when the zeolite is crystallized is preferably the following: heating is carried out at 170°C to 190°C for 16 hours to 20 hours, the heat-up time taken to increase a temperature from room temperature to the heating temperature is 1.5 hours to 5.0 hours, and the $SiO_2/Al_2O_3$ molar ratio of the seed crystals is 25 or more. In addition, the $H_2O/SiO_2$ molar ratio of the aqueous reaction mixture is preferably less than 100. Furthermore, the amount of the seed crystals adhering to the support is preferably maximized within the range in which the dropping of the seed crystals during the synthesis can be prevented.

In a case where the combination of the heating temperature, the heating time, the heat-up time, the condition of the seed crystals, and the $H_2O/SiO_2$ molar ratio of the aqueous reaction mixture when the crystallization is carried out falls within the above range, it is possible to obtain the zeolite membrane of the present invention. By shortening a time until the reaction temperature is reached, it is possible to cause the seed crystals not to dissolve completely, and possible to cause the reaction system to be in a state of high reactivity. This makes it unlikely for a defect to occur in the membrane. Furthermore, by forming the membrane at a high temperature and in a short time in this state, it is possible to prevent occurrence of the zeolite crystals in the aqueous reaction mixture, and possible to obtain the membrane which has stable performance. In addition, by increasing the $SiO_2/Al_2O_3$ ratio of the aqueous reaction mixture, it is possible to obtain the membrane which is suitable for gas separation. Moreover, by increasing the $SiO_2/Al_2O_3$ molar ratio of the seed crystals, it is possible to cause dissolution of surfaces of the seed crystals, and possible to cause the seed crystals to function easily as seed crystals.

The pressure when the zeolite membrane is formed is not limited, and an autogenous pressure occurring when the aqueous reaction mixture contained in a sealed container is heated in the above temperature range is sufficient. As necessary, a gas which is inert in the hydrothermal synthesis, such as nitrogen, may be added, and then pressurization may be carried out.

The support on which the zeolite membrane is formed through the hydrothermal synthesis is washed with water, and then subjected to heat treatment so as to be dried. Note, here, that the term "heat treatment" means drying the zeolite membrane composite through application of heat or calcining the organic template so as to remove the organic template in a case where the organic template is used.

The temperature during the heat treatment is typically 50°C or higher, preferably 80°C or higher, and more preferably 100°C or higher, and typically 200°C or lower, and preferably 150°C or lower, for the purpose of drying. For the purpose of calcination of the organic template, the template is typically 350°C or higher, preferably 400°C or higher, more preferably 430°C or higher, and even more preferably 450°C or higher, and is typically 900°C or lower, preferably 850°C or lower, even more preferably 800°C or lower, and particularly preferably 750°C or lower.

In a case where the above calcination temperature is excessively low, a large proportion of the organic template tends to remain. Thus, the zeolite may have a small number of pores, and accordingly the gas permeation amount during separation/concentration may decrease. In a case where the calcination temperature is excessively high, the difference in coefficient of thermal expansion between the support and the zeolite increases. This makes it likely for a crack to occur in the zeolite membrane. As a result, the denseness of the zeolite membrane may be lost, and the separation performance may decrease.

The time for the heat treatment is not limited, provided that the zeolite membrane is sufficiently dried or the organic template is calcined. The time for the heat treatment is preferably 0.5 hours or longer, and more preferably 1 hour or longer. The upper limit of the time for the heat treatment is not limited, and is typically 200 hours or shorter, preferably 150 hours or shorter, more preferably 100 hours or shorter, and particularly preferably 24 hours or shorter.

A calcination time varies depending on a heating rate or a cooling rate. However, the calcination time is not limited, provided that the organic template is sufficiently removed. The calcination time is preferably 1 hour or longer, and more preferably 5 hours or longer. The upper limit of the calcination time is not limited, and is, for example, typically 200 hours or shorter, preferably 150 hours or shorter, more preferably 100 hours or shorter, and particularly preferably 24 hours or shorter. The calcination may be carried out in an air atmosphere, but may be carried out in an atmosphere in which oxygen or an inert gas is added to air.

The heating rate in the calcination is preferably as slow as possible so that a phenomenon that the difference in coefficient of thermal expansion between the support and the zeolite membrane causes a crack in the zeolite membrane is reduced. The heating rate is typically 5°C/min or lower, preferably 2°C/min or lower, even more preferably 1°C/min or lower, and particularly preferably 0.5°C/min or lower. Typically, the heating rate is 0.1°C/min or higher, in consideration of workability.

The cooling rate after the calcination is also preferably controlled so as to avoid occurrence of a crack in the zeolite membrane. Similarly to the heating rate, the cooling rate is preferably as slow as possible, from the perspective of avoidance of a crack. The cooling rate is typically 5°C/min or lower, preferably 2°C/min or lower, even more preferably 1°C/min or lower, and particularly preferably 0.5°C/min or lower. Typically, the cooling rate is 0.1°C/min or higher, in consideration of the workability.

Note that, in a case where the hydrothermal synthesis is carried out in the presence of the organic template, the organic template can be removed from the obtained zeolite membrane composite by extraction, in addition to the above heat treatment. The organic template is preferably removed through the heat treatment, i.e., the calcination.

The zeolite membrane may be subjected to ion exchange or may be subjected to silylation treatment, as necessary.

The ion exchange is typically carried out after the organic template is removed, in case where the zeolite membrane is synthesized with use of the organic template. Ions to be exchanged include: protons; alkaline metal ions such as $Na^+$, $K^+$, and $Li^+$; Group 2 element ions such as $Ca^{2+}$, $Mg^{2+}$, $Sr^{2+}$, and $Ba^{2+}$; and ions of transition metal such as Fe, Cu, Zn, Ag, Al, Ga, and La. Among these, protons, $Na^+$, $Ca^{2+}$, $Mg^{2+}$, and ions of Fe, Al, Ga, and La are preferable.

The ion exchange may be carried out, for example, by a method in which the zeolite membrane that has been subjected to the calcination (e.g., in a case where the organic template is used) is treated with an aqueous solution containing an ammonium salt such as $NH_4NO_3$ or $NaNO_3$, or ions to be exchanged, or, in some cases, an acid such as hydrochloric acid, typically at a temperature from room temperature to 100°C, and then washed with water. After the ion exchange, calcination may be further carried out at 200°C to 500°C, as necessary.

In a case where the ion exchange with monovalent ions having a large ionic radius is carried out, the effective pore size tends to be small. In a case where the ion exchange with monovalent ions having a small ionic radius is carried out, the effective pore size has a value close to that of the pore size in the CHA structure. Also in the case of divalent ions such as calcium, the effective pore size has a value close to that of the pore size in the CHA structure, depending on the position of an exchange site. In this manner, by the ion exchange, it is also possible to control adsorption performance with respect to molecules or the pore size of the zeolite and accordingly control the permeation performance.

The silylation treatment is carried out, for example, by immersing the membrane composite in a solution containing an Si compound. This causes the surface of the zeolite membrane to be modified with the Si compound, and causes the above-described specific physicochemical properties to be imparted to the membrane composite or enhanced. For example, it is considered that, by reliably forming, on the surface of the zeolite membrane, a layer containing a large amount of Si-OH, the polarity of the surface of the membrane is improved and accordingly the separation performance with respect to polar molecules can be improved. Furthermore, by modifying the surface of the zeolite membrane with the Si compound, an effect of blocking a fine defect present in the surface of the membrane may be achieved secondarily.

It is also possible to reduce the effective pore size of the zeolite by the silylation treatment. By silylation of a terminal silanol at an outer surface and further lamination of a silylated layer, the effective pore size of the pores at the outer surface of the zeolite becomes small. In this manner, by the silylation treatment, it is also possible to control the adsorption performance with respect to molecules or the pore size of the zeolite and accordingly control the permeation performance.

A solvent used in the silylation treatment may be water or an organic solvent. A solution may be acidic or basic, and, in this case, a silylation reaction is catalyzed by an acid or a base. A silylation agent used is not limited, and alkoxysilane is preferable. A treatment temperature is typically from room temperature to 150°C or lower. A treatment time is approximately from 10 minutes to 30 hours. These may be determined, as appropriate, in accordance with the types of the silylation agent and the solvent.

The zeolite membrane composite of the present embodiment can be produced by the above production method, and has the above-described excellent properties. The membrane composite can be suitably used to produce a purified component through membrane separation of a gas mixture or a liquid mixture.

[Method for producing purified component]

A method for producing a purified component with use of the membrane composite of the present embodiment includes a step of bringing a mixture into contact with the membrane composite.

The mixture contains a first component and a second component. The first component is a component for which the zeolite membrane has higher permeability. The second component is a component for which the zeolite membrane has lower permeability than for the first component. Each of the first component and the second component may be a liquid or a gas. Further, each of the first component and the second component may be a single component, or may be a mixed component of two or more compounds.

By the method for producing a purified component of the present embodiment, one or both of a first purified component and a second purified component are obtained. The first purified component is the first component that has passed through the zeolite membrane. The second purified component is the second component that has not passed through the zeolite membrane.

In this manner, one or both of separation of the first component and concentration of the second component are achieved by the method for producing a purified component of the present embodiment. Such one or both of the separation of the first component and the concentration of the second component can be carried out similarly to the separation or concentration method for a gas mixture disclosed in Patent Literature 1, or the separation or concentration method for a liquid mixture disclosed in Patent Literature 1, except that the above-described membrane composite of the present embodiment is used.

[Separation or concentration method for gas mixture]

A separation or concentration method for a gas mixture is a method in which a gas mixture of a plurality of gas components is brought into contact with the above membrane composite, and a gas component for which high permeability is exhibited caused to pass through the membrane composite so that the gas component is separated from the gas mixture or so that the gas component is separated from the gas mixture and thereby a gas component for which low permeability is exhibited is concentrated. One separation function of the zeolite membrane in the present embodiment is separation as a molecular sieve. By this method, it is possible to suitably separate gas molecules which have a size equal to or greater than the effective pore size of the zeolite used and gas molecules which have a size smaller than the effective pore size.

Therefore, in the present embodiment, the gas component for which high permeability is exhibited is a gas component which is constituted by gas molecules that easily pass through the pores in the crystal phase of the CHA-type aluminosilicate zeolite, and is preferably a gas component which is constituted by gas molecules that have a molecular size smaller than approximately 0.38 nm.

Another separation function of the membrane composite in the present embodiment is to control adsorption of gas molecules to the zeolite membrane through control of the surface properties of the zeolite. That is, by controlling the polarity of the zeolite, it is also possible to cause molecules having high adsorption to the zeolite to easily pass through the membrane.

Preferable examples of the gas mixture include gases which contain at least one component selected from carbon dioxide, hydrogen, oxygen, nitrogen, methane, ethane, ethylene, propane, propylene, normal butane, isobutane, 1-butene, 2-butene, isobutene, sulfur hexafluoride, helium, carbon monoxide, nitrogen monoxide, water, and the like. Among the components of the gas mixture including the above gases, a gas component with respect to which a permeance is high passes through the membrane composite and is separated, while a gas component with respect to which a permeance is low is concentrated on a supply gas side.

The gas mixture more preferably contains at least two of the above-listed components. In this case, such two components are preferably a combination of a component with respect to which a permeance is high and a component with respect to which a permeance is low.

The condition for gas separation varies depending on the type or composition of a gas to be separated or the performance of the zeolite membrane, but a temperature is typically -20°C to 300°C, preferably 0°C to 200°C, and more preferably 0°C to 150°C. Separation at 0°C to 25°C is preferable because a temperature of 0°C to 25°C is often close to outside temperature and therefore energy for adjusting the temperature of the gas to be separated is not required or a small amount of energy is required. In the case of a gas of which adsorption to the zeolite membrane is high, the permeability tends to increase at a low temperature. Thus, for the purpose of increasing such gas permeability, the gas to be separated may be cooled in the range of 25°C or lower but - 20°C or higher.

The pressure of a supply gas may be as it is, in a case where the gas to be separated is at a high pressure. Alternatively, the pressure of the supply gas may be adjusted and reduced to a desired pressure, as appropriate. In a case where the pressure of the gas to be separated is lower than that used for separation, the pressure may be increased with use of a compressor or the like.

The pressure of the supply gas is not limited, but is typically atmospheric pressure or more, preferably 0.1 MPa or more, and more preferably 0.11 MPa or more. The upper limit of the pressure is typically 20 MPa or less, preferably 10 MPa or less, and more preferably 1 MPa or less.

The differential pressure between the gas on a supply side and the gas on a permeation side is not limited, but is typically 20 MPa or less, preferably 10 MPa or less, more preferably 5 MPa or less, and even more preferably 1 MPa or less. The differential pressure is typically 0.001 MPa or more, preferably 0.01 MPa or more, and more preferably 0.02 MPa or more. Note, here, that the term "differential pressure" means the difference between the partial pressure of the gas on the supply side and the partial pressure of the gas on the permeation side. Note also that, unless otherwise specified, a pressure [Pa] is an absolute pressure.

The pressure on the permeation side is not limited, but is typically 10 MPa or less, preferably 5 MPa or less, more preferably 1 MPa or less, and even more preferably 0.5 MPa or less. The lower limit of the pressure is not particularly limited, and only needs to be 0 MPa or more. In the case of 0 MPa, it is possible to carry out separation until the concentration of the gas for which high permeability is exhibited and which is in the gas for which low permeability is exhibited reaches the lowest level. In a case where there is an application where the gas on the permeation side is used while the pressure thereof is kept high, the pressure on the permeation side may be set to a high pressure.

The flow rate of the supply gas only needs to be a flow rate that allows compensation for reduction in gas which passes through the membrane. Further, the flow rate of the supply gas only needs to be a flow rate that allows mixing of gases such that the concentration, immediately near the membrane, of a gas for which low permeability is exhibited and which is contained in the supply gas is the same as the concentration of the entire gases. The flow rate of the supply gas varies depending on the pipe diameter of a separation unit or the separation performance of the membrane, but is typically 0.5 mm/sec or more, and preferably 1.0 mm/sec or more. The upper limit of the flow rate is not limited, and is typically 1 m/sec or less, and preferably 0.5 m/sec or less.

In the separation or concentration method for a gas mixture, a sweep gas may be used. The method in which a sweep gas is used is a method in which a gas of a type differing from that of the supplied gas is caused to flow on the permeation side, and the gas that has passed through the membrane is recovered.

The pressure of the sweep gas is typically atmospheric pressure, but is not limited. The pressure is preferably 20 MPa or less, more preferably 10 MPa or less, and even more preferably 1 MPa or less. The lower limit of the pressure is preferably 0.09 MPa or more, and more preferably 0.1 MPa or more. An necessary, the sweep gas may be used under reduced pressure.

The flow rate of the sweep gas is not limited, and only needs to be a flow rate that allows sufficient substitution of the gas that passes through the membrane. The flow rate of the sweep gas is typically 0.5 mm/sec or more, and preferably 1.0 mm/sec or more. The upper limit of the flow rate is not limited, and is typically 1 m/sec or less, and preferably 0.5 m/sec or less.

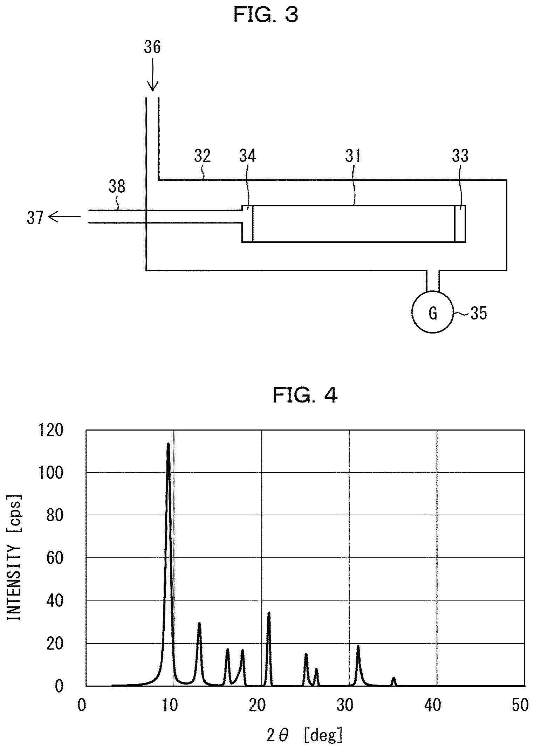

A device used for the gas separation is not limited, but the membrane is typically used as incorporated in a module. Such a membrane module may be, for example, a device as illustrated in Fig. 3 described later. Alternatively, membrane modules exemplified in, for example, "Gas Separation/Purification Techniques", published by Toray Research Center, 2007, page 22, etc. may be employed.

When membrane separation of a gas is carried out, multiple stages of zeolite membranes may be used. That is, a gas to be separated is supplied to a membrane module, and the gas on a non-permeation side that has not passed through a zeolite membrane may be further supplied to another membrane module, or the gas which has passed through the zeolite membrane may be supplied to another membrane module. In the former method, for example, it is possible to further increase the concentration of a component for which low permeability is exhibited and which is on the non-permeation side. In the latter method, it is possible to further increase the concentration of a component for which high permeability is exhibited and which is in the gas that has passed through the membranes.

In a case where separation is carried out with use of multiple stages of zeolite membranes, the pressure of a gas may be adjusted, as necessary, with use of a booster or the like, when the gas is supplied to a subsequent one of the zeolite membranes.

In a case where multiple stages of zeolite membranes are used, the zeolite membranes, which are disposed in respective stages, may differ from each other in performance. Regarding the performance of a zeolite membrane, a membrane which has high permeation performance typically tends to have low separation performance, whereas a membrane which has high separation performance tends to have low permeation performance. Therefore, in a case where a process is carried out until a gas component to be separated or concentrated has a given concentration and in a case where a membrane has high permeability, a necessary membrane area tends to be small, but, in such a case, a component for which low permeability is exhibited and which is to be concentrated on a non-permeation side tends to easily pass through the membrane to a permeation side. In a case where a membrane has high separation performance, a component for which low permeability is exhibited and which is to be concentrated on a non-permeation side is unlikely to pass through the membrane to a permeation side, but a necessary membrane area tends to be large. In separation with use of zeolite membranes of a single type, the relationship between a necessary membrane area and a permeation amount with respect to a gas to be concentrated is difficult to control, but use of zeolite membranes which differ from each other in performance facilitate this control. By disposing zeolite membranes on the basis of a membrane cost and the price of a gas to be separated or recovered such that a suitable relationship is established between a membrane area and a permeation amount with respect to a gas to be concentrated, it is possible to maximize the overall advantage.

The membrane composite of the present embodiment is excellent in chemical resistance, oxidation resistance, heat resistance stability and pressure resistance, exhibits high permeation performance and separation performance, and has performance excellent in durability. In particular, the membrane composite exhibit separation performance excellent for separation of an inorganic gas or a lower hydrocarbon.

Note, here, that the term "high permeation performance" means sufficient processing capacity. For example, in a case where carbon dioxide is caused to pass through the zeolite membrane at a temperature of 50°C and a differential pressure of 0.1 MPa, a permeance $[mol \cdot (m^2 \cdot s \cdot Pa)^{-1}]$ with respect to the gas component which passes through the zeolite membrane is typically $3 \times 10^{-8}$ or more, preferably $3 \times 10^{-7}$ or more, more preferably $5 \times 10^{-7}$ or more, even more preferably $7 \times 10^{-7}$ or more, and particularly preferably $1 \times 10^{-6}$ or more. The upper limit thereof is not limited, and is typically $3 \times 10^{-4}$.

The temperature dependence of the carbon dioxide permeance tends to be small in a case where the $SiO_2/Al_2O_3$ molar ratio of the zeolite membrane is relatively high. By setting the $SiO_2/Al_2O_3$ molar ratio of the zeolite membrane within the above relatively high range, it is possible to prevent excessive adsorption of carbon dioxide to the zeolite membrane, and possible to reduce the temperature dependence of the permeance.

In a case where, for example, methane is caused to pass through the membrane under similar conditions, a permeance $[mol \cdot (m^2 \cdot s \cdot Pa)^{-1}]$ with respect to this gas component is typically $3 \times 10^{-7}$ or less, preferably $3 \times 10^{-8}$ or less, and more preferably $1 \times 10^{-8}$ or less. The permeance is ideally 0, but may be of the order of approximately $10^{-10}$ or more practically.

Note, here, that the "permeance" (also referred to as "permeability") is a value obtained by dividing the amount of a substance that passes through the membrane, by the product of a membrane area, a time, and the difference in partial pressure of the substance that passes through the membrane between the supply side and the permeation side, and the unit thereof is [mol·(m$^2$·s·Pa)$^{-1}$]. The permeance can be calculated by the method in the examples described later.

The selectivity of the zeolite membrane is expressed by an ideal separation coefficient and a separation coefficient. The ideal separation coefficient and the separation coefficient are each an indicator that indicates selectivity generally used in membrane separation. The ideal separation coefficient is a value calculated by the method in the examples described later. The separation coefficient is a value calculated by the method described below.

In separation of a mixed gas, in a case where the separation coefficient is determined, the separation coefficient is calculated in accordance with the following formula (1). In formula (1), $Q'_1$ and $Q'_2$ respectively represent permeation amounts [mol·(m$^2$·s)$^{-1}$] with respect to a gas for which high permeability is exhibited and a gas for which low permeability is exhibited, and $P'_1$ and $P'_2$ respectively represent the partial pressures [Pa] of the gas for which high permeability is exhibited and which is in a supply gas and the gas for which low permeability is exhibited and which is in the supply gas.

Separation coefficient = $(Q'_1/Q'_2)/(P'_1/P'_2)$ (1)

The ideal separation coefficient is, for example, typically 10 or more, preferably 20 or more, more preferably 30 or more, even more preferably 40 or more, and particularly preferably 50 or more, in a case where carbon dioxide and methane are caused to pass through the membrane at a temperature of 50°C and at a differential pressure of 0.1 MPa. The upper limit of the ideal separation coefficient is for a case where only carbon dioxide passes through the membrane. In this case, the ideal separation coefficient has an infinite value, but the separation coefficient may be approximately 100,000 or less practically.

The separation coefficient is, for example, typically 10 or more, preferably 20 or more, more preferably 30 or more, even more preferably 40 or more, and particularly preferably 50 or more, in a case where a mixed gas containing carbon dioxide and methane at a volume ratio of 1:1 is caused to pass through the membrane at a temperature of 50°C and at a differential pressure of 0.1 MPa. The upper limit of the separation coefficient is for a case where only carbon dioxide passes through the membrane. In this case, the separation coefficient has an infinite value, but the separation coefficient may be approximately 100,000 or less practically.

The membrane composite of the present embodiment has excellent properties as described above, and can be particularly suitably used, for example, in a gas separation technique as described below.

As a carbon dioxide separation technique, the following are, for example, included: removal of carbon dioxide from natural gas; and removal of carbon dioxide from landfill gas (containing approximately 60% methane, approximately 40% carbon dioxide, and trace amounts of nitrogen and water vapor) generated due to landfilling of an organic substance such as a household waste.

As a hydrogen separation technique, the following are, for example, included: recovery of hydrogen in the petroleum refining industry; recovery/purification of hydrogen (mixture of hydrogen, carbon monoxide, carbon dioxide, hydrocarbon, and the like) in various reaction processes in the chemical industry; and production of highly pure hydrogen for fuel cells. Production of hydrogen for fuel cells is carried out through a steam reforming reaction of methane, and requires separation of hydrogen from a mixed gas of $H_2$, CO, $CH_4$ and $H_2O$.

In addition, as an oxygen separation technique, production of oxygen-enriched gas (e.g., oxygen-enriched air for medical use, combustion, and the like) from air is included. As a nitrogen separation technique, the following are included: production of nitrogen-enriched gas from air (for explosion prevention, oxidation prevention, and the like); separation of water vapor (dehumidification for precision machines and the like); separation of dissolved gas (deaeration of water and organic liquids); and separation of organic gas (separation of organic gas, olefins, and paraffins in the petroleum refining industry and the petrochemical industry).

[Separation or concentration method for liquid mixture]

A separation or concentration method for a liquid mixture is a method in which a liquid mixture of a plurality of components is brought into contact with the above membrane composite, and a component for which high permeability is exhibited is caused to pass through the membrane composite so that the component is separated from the liquid mixture or so that the component is separated from the liquid mixture and thereby a component for which low permeability is exhibited is concentrated. In this method, the membrane composite of the present embodiment is used as a preferable embodiment.

In the above method, a liquid mixture containing an organic compound is brought into contact with the zeolite membrane and the support from one of a support side and a zeolite membrane side, and the other is set at a pressure lower than that of the one so that a component for which the zeolite membrane has high permeability (substance which is contained in the mixture and for which relatively high permeability is exhibited) passes through the membrane selectively, i.e., as a main component of a permeation substance. This makes it possible to separate, from the liquid mixture, the component (substance) for which high permeability is exhibited. This consequently increases the concentration of the specific organic compound in the mixture (substance which is contained in the mixture and for which relatively low permeability is exhibited), and thus makes it possible to separate and recover or concentrate the specific organic compound.

The liquid mixture which is subjected to separation or concentration is not limited and may be any mixture, provided that the liquid mixture is constituted by a plurality of components which can be separated or concentrated with use of the membrane composite of the present embodiment.

In a case where the liquid mixture is, for example, a mixture of an organic compound and water (hereinafter also referred to as "water-containing organic compound"), the zeolite membrane typically has higher permeability for the water. Therefore, the water is separated from the liquid mixture, and the organic compound is concentrated in the original liquid mixture. A separation or concentration method that is referred to as a pervaporation method or a vapor permeation method is one of preferable embodiments of the method for producing a purified component of the present embodiment.

The pervaporation method is a separation or concentration method in which a liquid mixture is introduced into a separation membrane as it is. Therefore, the pervaporation method facilitates a process including separation or concentration.

The vapor permeation method is a separation or concentration method in which a liquid mixture is vaporized and then introduced into a separation membrane. Therefore, it is possible to use the vapor permeation method in combination with a distillation device, or it is possible to use the vapor permeation method for separation at a higher temperature or pressure. Moreover, in the vapor permeation method, since a liquid mixture is vaporized and then introduced into the separation membrane, it is possible to further reduce an effect that impurities which are contained in a supply liquid or a substance which forms an aggregate or an oligomer in a liquid state has/have on the zeolite membrane. The membrane composite of the present embodiment can be suitably used in each of the methods.

In a case where separation at a high temperature is carried out by the vapor permeation method, separation performance generally decreases as a temperature becomes higher. However, the membrane composite of the present embodiment can exhibit high separation performance even at a high temperature. Typically, in the vapor permeation method, a liquid mixture is vaporized and then separated. Therefore, in the vapor permeation method, separation is carried out under a severer condition than in the pervaporation method. Accordingly, a membrane composite is required to also have durability. The membrane composite of the present embodiment has durability which allows separation even under a high-temperature condition. Therefore, the membrane composite of the present embodiment is suitable for the vapor permeation method.

The vapor permeation method can be carried out with use of a device as illustrated in Fig. 3 of Patent Literature 1. In the device, a liquid to be separated is delivered to a vaporizer at a given flow rate by a liquid supply pump, and is fully vaporized by heating in the vaporizer, resulting in a gas to be separated. The gas to be separated is introduced into a zeolite membrane composite module in a thermostatic bath, and supplied to the outer side of the zeolite membrane composite. The zeolite membrane composite module is configured such that the zeolite membrane composite is held in a housing. The pressure of the inside of the zeolite membrane composite is reduced by a vacuum pump, and the pressure difference with the gas to be separated is approximately 1 atmospheric pressure. The pressure of the inside can be measured with use of a Pirani gauge (not illustrated). Due to this pressure difference, water which is contained in the gas to be separated and which is a permeation substance passes through the zeolite membrane composite. The substance which has passed through the membrane composite is collected in a permeation liquid collection trap. In a case where the substance that is not collected in the permeation liquid collection trap is present, the substance is collected in a cold trap. On the other hand, a component which is contained in the gas to be separated and which has not passed through the membrane composite is liquefied and collected in a separation target liquid recovery trap.

The membrane composite of the present embodiment exhibits high permeation performance and high selectivity, and has performance as a separation membrane having excellent durability, even in a case where a water-containing organic compound having a water content of 20% by mass or more is processed.

Note, here, that the term "high permeation performance" means sufficient processing capacity. For example, in a case where a mixture which contains 2-propanol or N-methyl-2-pyrrolidone and water and which has a water content of 30% by mass is caused to pass through the zeolite membrane at 70°C and under a pressure difference of 1 atmospheric pressure ($1.01 \times 10^5$ Pa), the permeation flux of the substance which passes through the zeolite membrane is 1 kg/(m$^2$·h) or more, preferably 3 kg/(m$^2$·h) or more, and more preferably 5 kg/(m$^2$·h). The upper limit of the permeation flux is not limited, and is typically 20 kg/(m$^2$·h) or less, and preferably 15 kg/(m$^2$·h) or less.

The high permeation performance can also be expressed by a permeance (also referred to as "permeability"). The "permeance" indicates a permeation flux per pressure difference (pressure normalized flux), and is a value obtained by dividing the amount of a substance which passes through a membrane by the product of a membrane area, a time, and the partial pressure difference of water. In a case where the high permeation performance is expressed in units of permeance and, for example, in a case where a mixture which contains 2-propanol or N-methyl-2-pyrrolidone and water and which has a water content of 30% by mass is caused to pass through the membrane at 70°C and under a pressure difference of 1 atmospheric pressure ($1.01 \times 10^5$ Pa), the water permeance is typically $3 \times 10^{-7}$ mol/(m$^2$·s·Pa) or more, preferably $5 \times 10^{-7}$ mol/(m$^2$·s·Pa) or more, more preferably $1 \times 10^{-6}$ mol/(m$^2$·s·Pa) or more, and particularly preferably

$2\times10^{-6}$ mol/(m$^2$·s·Pa) or more. The upper limit of the permeance is not limited, and is typically $1\times10^{-4}$ mol/(m$^2$·s·Pa) or less, and preferably $5\times10^{-5}$ mol/(m$^2$·s·Pa) or less.

The selectivity of the zeolite membrane is expressed by a separation coefficient. The separation coefficient is an indicator which expresses selectivity generally used in membrane separation and is calculated by the following formula (2). In formula (2), $P_{\alpha}$ represents the mass percent concentration of a main component in a permeation liquid, $P_{\beta}$ represents the mass percent concentration of an accessory component in the permeation liquid, $F_{\alpha}$ represents the mass percent concentration, in a mixture to be separated, of a component which is to be the main component in the permeation liquid, and $F_{\beta}$ represents the mass percent concentration, in the mixture to be separated, of a component which is to be the accessory component in the permeation liquid.

$$\text{Separation coefficient} = (P_{\alpha}/P_{\beta})/(F_{\alpha}/F_{\beta}) \quad (2)$$

For example, in a case where a mixture which contains 2-propanol or N-methyl-2-pyrrolidone and water and which has a water content of 30% by mass is caused to pass through the membrane at 70°C and under a pressure difference of 1 atmospheric pressure ($1.01\times10^5$ Pa), the separation coefficient is typically 1,000 or more, preferably 4,000 or more, more preferably 10,000 or more, and particularly preferably 20,000 or more. The upper limit of the separation coefficient is for a case where only water passes through the membrane. In this case, the separation coefficient has an infinite value, but is preferably 10,000,000 or less, and more preferably 1,000,000 or less.

In a case where a separation target is a water-containing organic compound, the water content thereof is typically 20% by mass or more, preferably 30% by mass or more, and more preferably 45% by mass or more, and is typically 95% by mass or less, preferably 80% by mass or less, and more preferably 70% by mass or less.

In the above-described method, a substance which passes through the zeolite membrane is typically water. In this case, a low water content results in inefficiency, because the low water content causes reduction in processing capacity. An excessively high water content results in decrease in economical effect, because the zeolite membrane is required to have a large area for concentration (in a case where the zeolite membrane is formed in a tubular shape, the number of tubes increases), and therefore an decreases.

The water content of the water-containing organic compound may be adjusted in advance by an appropriate water content adjustment method. In this case, a preferable water content is similar to the above water content. Examples of the water content adjustment method include known methods such as distillation, pressure swing adsorption (PSA), temperature swing adsorption (TSA), and a desiccant system.

Further, water may be further separated from the water-containing organic compound from which the water has been separated by the zeolite membrane composite. This makes it possible to more highly separate the water, and possible to more highly concentrate the water-containing organic compound.

Examples of the organic compound include organic acids, alcohols, ketones, aldehydes, ethers, organic compounds containing nitrogen, and esters. Examples of the organic acids include carboxylic acids, sulfonic acids, sulfinic acid, barbituric acid, uric acid, phenol, enol, diketone-type compounds, thiophenol, imide, oxime, aromatic sulfonamide, and primary and secondary nitro compounds. Examples of the carboxylic acids include acetic acid, acrylic acid, propionic acid, formic acid, lactic acid, oxalic acid, tartaric acid, and benzoic acid.

Examples of the alcohols include methanol, ethanol, and isopropanol (2-propanol). Examples of the ketones include acetone and methyl isobutyl ketone. Examples of the aldehydes include acetaldehyde. Example of the ethers include dioxane and tetrahydrofuran. Examples of the organic compounds containing nitrogen (N-containing organic compounds) include dimethylformamide and N-methylpyrrolidone. Examples of the esters include acetic acid esters and acrylic acid esters.

Among these, the membrane composite of the present embodiment can exhibit a noticeable effect in a method which is for separating an organic acid from a mixture of the organic acid and water and in which the characteristics of a molecular sieve and hydrophilicity can be both utilized. For example, a preferable example is separation of a carboxylic acid and water, and a particularly preferable example is separation of acetic acid and water.

In case where water is separated from a mixture of an organic substance, other than an organic acid, and the water, the organic substance preferably has 2 or more carbon atoms, and more preferably 3 or more carbon atoms.

Among such organic substances other than organic acids, organic compounds containing at least one selected from alcohols, ethers, ketones, aldehydes, and amides are particularly preferable. Among these organic compounds, compounds having 2 to 10 carbon atoms are preferable, and compounds having 3 to 8 carbon atoms are more preferable.

The organic compound may also be a polymer compound which can form a mixture (mixed solution) together with water. Examples of the polymer compound include polymer compounds having polar groups in the molecules thereof, for example, polyols such as polyethylene glycol and polyvinyl alcohol; polyamines; polysulfonic acids; polycarboxylic acids such as polyacrylic acid; polycarboxylic acid esters such as polyacrylic acid esters; modified polymer compounds obtained by modifying polymers through graft polymerization or the like; copolymerized polymer compounds obtained by copolymerization of nonpolar monomers, such as olefins, and polar monomers having polar groups, such as carboxyl groups; and the like.

The water-containing organic compound may be a mixture which forms an azeotropic mixture, such as a mixture of water and phenol. In separation of a mixture which forms an azeotropic mixture, water can be separated selectively and more efficiently than in separation by distillation. Thus, such a mixture is preferable. Specific examples thereof include: mixtures of alcohols, such as ethanol, 1-propanol, 2-propanol, 1-butanol, and 2-butanol, and water; mixtures of esters, such as ethyl acetate, ethyl acrylate, and methyl methacrylate, and water; mixtures of carboxylic acids, such as formic acid, isobutyric acid, and valeric acid, and water; mixtures of aromatic organic substances, such as phenol and aniline, and water; and mixtures of nitrogen-containing compounds, such as acetonitrile and acrylonitrile, and water.

Further, the water-containing organic compound may be a mixture of water and a polymer emulsion. Note, here, that the "polymer emulsion" is a mixture which contains a surfactant and a polymer and which is typically used in adhesives, coating materials, and the like. Examples of a polymer used in the polymer emulsion include: polyvinyl acetate; polyvinyl alcohol; acrylic resin; polyolefin; olefin-polar monomer copolymers such as ethylene-vinyl alcohol copolymers; thermoplastic resins such as polystyrene, polyvinyl ether, polyamide, polyester, and cellulose derivatives; thermosetting resins such as urea resin, phenolic resin, epoxy resin, and polyurethane; and rubbers such as natural rubber, polyisoprene, polychloroprene, and butadiene copolymers such as styrene-butadiene copolymers. As the surfactant, a known surfactant can be used.

The membrane composite of the present embodiment has acid resistance. Therefore, the membrane composite of the present embodiment can be particularly effectively used, for example, for separation of water from a mixture of the water and an organic acid such as acetic acid or separation of water for promotion of an esterification reaction.

The separation or concentration method for a liquid mixture can be carried out by (i) preparing, with use of the membrane composite of the present embodiment, an appropriate separation or concentration device, for example, a device as illustrated in Fig. 3 of Patent Literature 1 and (ii) introducing a liquid mixture of a plurality of components into the device. Such a device used for separation or concentration can be constituted by known members.

[Summary]

The membrane composite of the present invention has excellent separation performance over conventional membrane composites. Therefore, the present invention leads to development and expansion of various separation techniques, and is expected to contribute, for example, to achievement of Goal 9 "Build resilient infrastructure, promote inclusive and sustainable industrialization and foster innovation" of Sustainable Development Goals (SDGs) proposed by the United Nations.

The present invention is not limited to the embodiments described above, but may be altered in various ways within the scope of the claims. The present invention also encompasses, in its technical scope, any embodiment derived by combining, as appropriate, technical means disclosed in differing embodiments.

Examples

The following description discusses examples of the present invention. First, methods for measuring the physical properties and separation performance of zeolite membranes in the examples and the comparative examples below are described.

(1) X-ray diffraction (XRD)

XRD measurement was carried out under the following conditions.

(Measurement device)

· Device name: RINT-UltimaIII manufactured by Rigaku Corporation
· Specifications of optical system: Parallel beam optical system

Vertical goniometer: D990825A03
Incident side: Sealed X-ray tube (CuKα)
Soller Slit (flexible optical system, 5°)
Divergence Slit (variable slit)
Light-receiving side: monochromator
Long slit

Ni slit

(Measurement conditions)

X-ray output (CuKα): 40 kV, 30 mA
Scanning axis: θ/2θ
Scanning range (2θ): 3.0° to 50.0°
Measurement mode: Continuous
Reading width: 0.01°
Scanning speed: 1°/min
Divergence slit: 1.0 mm
Divergence vertical limit slit: 5 mm
Scattering slit: Open
Light-receiving slit: Open
Offset angle: 0°
h: 0
k: 0
l: 0

(Analysis conditions)

· Software name: PDXL 2, version 2.4.2.0, manufactured by Rigaku Corporation

How to set baseline: A baseline was set by the Sonneveld-visser method.
Nodes were set such that the distances between the nodes were each 2 deg to 6 deg and no peaks were present at the locations of the nodes.
Each peak was detected with use of PDXL2.
The detected peaks were visually examined, and adjustment was carried out so that reference points for detection matched the measured peaks. As the values of integrated intensities, values calculated by the software were employed. As the values of peak intensities, values calculated by the software were employed.
When measurement was carried out, a sample was set such that irradiation with X-rays was carried out in the direction parallel to the axial direction of a membrane composite having a cylindrical shape. The sample was also set such that the upper end thereof was at the same height as that of the measurement surface of the device.

(2) Grazing incidence X-ray diffraction (GIXD)

GIXD measurement was carried out by the same method as that for XRD, except for control of the incident angle of X-rays. In the GIXD measurement, the incident angle of the X-rays was controlled such that the incident-side angle of the X-rays was fixed during one measurement and measurement was carried out a plurality of times while the incident angle was varied for each measurement. The incident angle of the X-rays at the time when all peaks derived from a zeolite membrane were no longer detected as the incident angle was gradually made small was regarded as 0°. The incident angle of the X-rays at the time when peaks derived from a support (alumina) began to be detected as the incident angle was gradually made large from 0° was regarded as the minimum incident angle that allowed the X-rays to pass through the zeolite membrane, and regarded as an angle for measuring the zeolite membrane.
An obtained diffraction pattern was smoothed with use of analysis software, Kα2 rays were removed, and then peaks were detected by a second derivative method. The detected peaks were visually examined to confirm the accuracy of the detection, and the error in integrated intensity between actual peaks and peaks for detection was kept within 5%. When the irradiation angle was varied, the height of a surface of the membrane was fixed such that the same position on the membrane was irradiated with the X-rays. As the values of integrated intensities, values calculated by the software regarding the peaks for detection were employed. As the values of peak intensities, values calculated by the software regarding the peaks for detection were employed.

(3) SEM-EDX measurement

(3-1) SEM EDX measurement in surface area of zeolite membrane

In order to determine the $SiO_2/Al_2O_3$ molar ratio of the zeolite membrane, scanning electron microscope-energy dispersive X-ray spectroscopy (SEM-EDX) measurement was carried out under the following conditions. The surface of the zeolite membrane was scanned across the entire field of view (25 $\mu$m $\times$ 18 $\mu$m) at a magnification of 5,000 times, and the average of $SiO_2/Al_2O_3$ molar ratios in the entire field of view was calculated.

Device name (SEM): JSM-7900F(manufactured by JEOL Ltd.)
Acceleration voltage: 6 kV
Detector: Secondary electron detector

Device name (EDS): Ultim Max 170 (manufactured by Oxford Instruments)
Acceleration voltage: 6 kV
Magnification: 5,000 times

(3-2) SEM-EDX measurement at surface point of zeolite membrane

In order to determine the $SiO_2/Al_2O_3$ molar ratio of the zeolite membrane, scanning electron microscope-energy dispersive X-ray spectroscopy (SEM-EDX) measurement was carried out under the following conditions. Three images of the surface of the zeolite membrane were captured at a magnification of 5,000 times. With use of the images, $SiO_2/Al_2O_3$ molar ratios were measured at 9 or more points of (2$\pm$0.5 $\mu$m) $\times$ (2$\pm$0.5) $\mu$m, and the average value of the $SiO_2/Al_2O_3$ molar ratios was regarded as a surface SAR.

Device name (SEM): JSM-7900F (manufactured by JEOL Ltd.)
Acceleration voltage: 6 kV
Detector: Secondary electron detector

Device name (EDS): Ultim Max 170 (manufactured by Oxford Instruments)
Acceleration voltage: 6 kV
Magnification: 5,000 times

(3-3) SEM EDX measurement of seed crystals

In order to determine the $SiO_2/Al_2O_3$ molar ratio of the zeolite membrane, scanning electron microscope-energy dispersive X-ray spectroscopy (SEM-EDX) measurement was carried out under the following conditions, and the average of $SiO_2/Al_2O_3$ molar ratios was calculated.

Device name (SEM): JSM-7900F (manufactured by JEOL Ltd.)
Acceleration voltage: 6 kV
Detector: Secondary electron detector

Device name (EDS): Ultim Max 170 (manufactured by Oxford Instruments)
Acceleration voltage: 6 kV
Magnification: 5,000 times

(4) Measurement of membrane thickness

Measurement of the membrane thickness of the zeolite membrane of the zeolite membrane composite was carried out based on the following conditions and operation method.
A cross section of an arbitrary part of the zeolite membrane composite was exposed, and a smooth surface was prepared with use of a cross section polisher. The smooth surface was observed with use of an SEM at a magnification of 2,000 times to obtain images of 2 to 6 fields of view. With use of the images, the arithmetic average value of distances from the surface of the zeolite membrane to a surface of the porous support was measured.
The tilts of the obtained images were set such that the interface between the porous support and the zeolite membrane was visually horizontal at a low magnification. The arithmetic average of the lengths of perpendicular lines drawn at 1 $\mu$m intervals from the surface of the zeolite membrane toward the porous support was calculated, and regarded as the membrane thickness. The endpoints of the perpendicular lines were set at the points at which particles of the porous support first appeared on the perpendicular lines drawn from the surface of the porous support toward the inside of the support.

In order to clarify the interface between the porous support and the zeolite membrane, secondary electron images and EDX images were superimposed and displayed, and then used for the above calculation of the membrane thickness.

Measurement conditions were as follows.

Device:

SEM: JSM-7900F (manufactured by JEOL Ltd.)
EDX: ULTim MAX (manufactured by Oxford Instruments)

Acceleration voltage: 6 kV
Analysis software for image generation: AZtec Live (manufactured by Oxford Instruments)
Image processing software: ImageJ

(5) Air permeation amount

Under atmospheric pressure, one end of the membrane composite was sealed, and the other end was connected to a vacuum line at 5 kPa in a state where gas tightness was maintained. The flow rate of air which had passed through the membrane composite was measured with use of a mass flow meter installed between the vacuum line and the zeolite membrane composite to determine an air permeation amount [L/(m$^2$·h)].

As the mass flow meter, used was a mass flow meter "8300" manufactured by KOFLOC Corporation, designed for N$_2$ gas, and having a maximum flow rate of 500 ml/min (at 20°C, equivalent to 1 atmospheric pressure). When the display of the mass flow meter "8300" manufactured by KOFLOC Corporation indicated 10 ml/min or less (20°C, equivalent to 1 atmospheric pressure), a mass flow meter "MM-2100M" manufactured by Lintec Co., Ltd., designed for air gas, having a maximum flow rate of 20 ml/min (0°C, equivalent to 1 atmospheric pressure) was used to measure the air permeation amount.

(6) Water vapor adsorption isotherm

A water vapor adsorption isotherm at 35°C was measured with use of an adsorption isotherm measurement device (BELSORP 18, manufactured by BEL Japan Inc.).

The zeolite membrane composite was cut, in advance, to an appropriate size that allowed the zeolite membrane composite to be put in a measurement cell. Under vacuum evacuation, the zeolite membrane composite was heated and dried at 120° C for 5 hours. The zeolite membrane composite thus obtained was used for the measurement. The measurement was carried out under the following conditions: an air thermostatic bath temperature of 50°C, an adsorption temperature of 35°C, an initial introduction pressure of 3 torr ($4.00 \times 10^2$ Pa), a saturated vapor pressure of 42.181 torr ($56.237 \times 10^2$ Pa), and an equilibrium time of 500 seconds.

From an obtained measurement result, water adsorption capacities (g) per gram of the membrane composite at relative pressures of 0.8 and 0.2 were obtained.

(7) Single-component gas permeability test

A single-component gas permeability test was carried out as follow with use of a device schematically illustrated in Fig. 3. Sample gases used were carbon dioxide (purity: 99.9%, manufactured by Koatsu Gas Kogyo Co., Ltd.), methane (purity: 99.999%, manufactured by Japan Fine Products Corporation), hydrogen (purity: 99.99% or more, manufactured by Keiyo Hydrogen Co., Ltd.), nitrogen (purity: 99.99%, manufactured by Toho Sanso Kogyo Co., Ltd.), and helium (purity: 99.99, manufactured by Japan Helium Center Corporation).

In Fig. 3, a zeolite membrane composite (membrane composite) 31 having a cylindrical shape is installed in a thermostatic bath (not illustrated) in the state of being housed in a pressure-resistant container 32 made of stainless steel. A temperature control device is provided to the thermostatic bath so that the temperature of a sample gas can be adjusted.

The membrane composite 31 is the above-described membrane composite of the present embodiment. One end of the membrane composite 31 is sealed with a columnar cylindrical end pin 33. The other end is connected to a connection part 34, and the other end of the connection part 34 is connected to the pressure-resistant container 32. The inside of the membrane composite 31 and piping 38 through which a permeation gas 37 is discharged (permeation gas discharging piping) are connected via the connection part 34. The piping 38 extends to the outside of the pressure-resistant container 32. A pressure gauge 35 which measures the pressure of the sample gas on a sample gas supply side is provided in communication with the pressure-resistant container 32. Each connection part secures airtight connection.

In a case where a single-component gas permeability test is carried out with use of the device in Fig. 3, the sample gas (supply gas 36) is supplied between the pressure-resistant container 32 and the membrane composite 31 at a constant pressure, and the permeation gas 37 which has passed through the membrane composite 31 is measured with use of a flowmeter (not illustrated) connected to the piping 38.

More specifically, drying at a temperature equal to or higher than a measurement temperature and evacuation or purging with use of the supply gas to be used are carried out in order to remove a component such as water or air. Then, the temperature of the sample and the differential pressure between the supply gas 36 side and the permeation gas 37 side of the zeolite membrane composite 1 are made constant. After the flow rate of the permeation gas has been stabilized, the flow rate of the sample gas (permeation gas 37) which has passed through the membrane composite 31 is measured, and a gas permeance [mol·(m²·s·Pa)⁻¹] is calculated. As the pressure when the permeance is calculated, the difference in pressure (differential pressure) of the supply gas between the supply side and the permeation side is used.

Based on the above measurement result, an ideal separation coefficient $\alpha$ is calculated by formula (3) below. In formula (3), Q1 and Q2 respectively represent permeation amounts [mol·(m²·s)⁻¹] with respect to a gas for which high permeability is exhibited and a gas for which low permeability is exhibited, and P1 and P2 respectively represent the differences in pressures [Pa] of the gas for which high permeability is exhibited and the gas for which low permeability is exhibited between the supply side and the permeation side.

$$\alpha = (Q1 / Q2) / (P1 / P2) \qquad (3)$$

(3)

The ideal separation coefficient $\alpha$ indicates the ratio of a permeance with respect to the gas for which high permeability is exhibited and a permeance with respect to the gas for which low permeability is exhibited. Therefore, the ideal separation coefficient $\alpha$ can be determined through calculation of gas permeances and calculation of the ratio of the gas permeances.

(8) Indicator of defect amount

The product of a permeation amount (permeance) with respect to methane gas and the membrane thickness of the zeolite membrane was employed as an indicator of a defect amount.

Evaluation results in the examples below are summarized in Tables 1 and 2.

[Example 1]

[Preparation of reaction mixture]

To a solution obtained by mixing 189.5 g of an aqueous 1 mol/L-NaOH solution, 170.1 g of an aqueous 25wt%-KOH solution, and 14,709 g of water, 25.6 g of an aluminum hydroxide (containing 53.9% by mass of $Al_2O_3$, manufactured by Kyowa Chemical Industry Co., Ltd.) was added and dissolved by stirring to prepare a transparent solution.

To the obtained transparent solution, 401.7 g of an aqueous N,N,N-trimethyl-1-adamantanammonium hydroxide (hereinafter referred to as "TMADAOH") solution (containing 20% by mass of TMADAOH, manufactured by SACHEM, Inc.) was added as an organic template. Furthermore, 1,421.1 g of colloidal silica (manufactured by Nissan Chemical Corporation, SNOWTEX-40) was added, and then an obtained mixed solution was stirred for 2 hours. In this manner, an aqueous reaction mixture was obtained. The composition (molar ratio) of this reaction mixture was such that $SiO_2/Al_2O_3/NaOH/KOH/H_2O/TMADAOH$ = 1/0.014/0.02/0.08/95/0.04 and $SiO_2/Al_2O_3$ = 70.

[Preparation of inorganic porous carrier]

A porous alumina tube (outer diameter: 12 mm, inner diameter: 9 mm, length: 1,002 mm) was washed by causing water to flow in the porous alumina tube, and then dried. In this manner, an inorganic porous support was obtained.

[Preparation of seed crystals]

Hydrothermal synthesis was carried out at 160°C for 2 days with gel composition (molar ratio) that $SiO_2/Al_2O_3/NaOH/KOH/H_2O/TMADAOH$ = 1/0.017/0.12/0.055/20/0.07. A generated precipitate was filtered, washed with water, and dried. In this manner, CHA-type zeolite grains were obtained, and used as seed crystals. The grain size of the seed crystals was approximately 1 μm.

[Generation of zeolite membrane]

The seed crystals were dispersed in water. The support was immersed in an obtained dispersion liquid for a given period of time, and then dried at 120°C for 2 hours or longer so that the seed crystals were adhered to the support. The amount of increase in mass after drying with respect to the mass of the support was determined, and the amount of adhering seed crystals was determined from the surface area of the support which had been in contact with the dispersion liquid. The amount of the adhering seed crystals was 1 g/m$^2$.

The support to which the seed crystals had been adhered was housed in a PFA inner cylinder (length: 1,200 mm) in an autoclave, and the above-described reaction mixture was put in the inner cylinder so that the support was immersed in the reaction mixture. The autoclave was then sealed, and the support was heated under autogenous pressure at 180°C for 18 hours in a static state. After a given period of time had elapsed, the support was left to cool, taken out from the reaction mixture, washed, and dried at 120°C for 2 hours or longer. The support was then subjected to calcination in air in an electric furnace at 500°C for 5 hours. A heating rate and a cooling rate at this time were both set to 0.5°C/min. Thus, a membrane composite 1 was obtained in which a zeolite membrane of a CHA-type zeolite was formed on the outer circumferential surface of the support.

From the difference between the mass of the membrane composite 1 and the mass of the support, the mass of the CHA-type zeolite crystallized on the support was determined. The mass of the CHA-type zeolite in the membrane composite 1 was 32 g/m$^2$.

[Measurement results]

From XRD measurement with respect to the membrane composite 1, it was confirmed that the CHA-type zeolite was generated. The ratio p2/p1 of an integrated intensity p2 of a peak at or around $2\theta=17.9°$ to an integrated intensity p1 of a peak at or around $2\theta=20.8°$ in XRD was 0.4. The ratio p3/p1 of an integrated intensity p3 of a peak at or around $2\theta=9.6°$ to the integrated intensity p1 of the peak at or around $2\theta=20.8°$ in the XRD was 5.4.

An X-ray diffraction pattern in GIXD of the membrane composite 1 is illustrated in Fig. 4. The incident angle of X-rays with respect to a surface incident angle is 0.5°. The ratio p3/p1 of an integrated intensity p3 of a peak at or around $2\theta=9.6°$ to an integrated intensity p1 of a peak at or around $2\theta=20.8°$ in the GIXD was 7.8. The ratio p3/p4 of the integrated intensity p3 of the peak at or around $2\theta=9.6°$ to an integrated intensity p4 of a peak at or around $2\theta=16.2°$ in the GIXD was 14.1.

In a single-component gas permeability test, as pretreatment, carbon dioxide was introduced between the pressure-resistant container 2 and the membrane composite 1 at 140°C so that a pressure (external pressure of the membrane composite 1) was kept at approximately 0.16 MPa, a pressure of the inside of a cylinder of the membrane composite 1 (internal pressure of the membrane composite 1) was set to 0.10 MPa (atmospheric pressure), and then drying was carried out for approximately 70 minutes. The external pressure of the membrane composite 1 was then set to 0.2 MPa. At this time, the difference between the external pressure and the internal pressure of the membrane composite 1 was 0.1 MPa. Then, a temperature was set to 50°C. After the temperature had been stabilized, the supply gas 7 was changed to a gas to be measured, and a gas permeation amount was measured. The difference between the external pressure and the internal pressure of the membrane composite 1 at the time of the measurement was 0.1 MPa.

An SAR in a surface area of the zeolite membrane of the membrane composite 1 was 46. The membrane thickness of the zeolite membrane of the membrane composite 1 was 2.8 $\mu$m in average.

According to single-component gas permeability tests, the gas permeation amount of the membrane composite 1 at 50°C was as follows: $1.58\times10^{-6}$ [mol·(m$^2$·s·Pa)$^{-1}$] in the case of carbon dioxide; $9.97\times10^{-9}$ [mol·(m$^2$·s·Pa)$^{-1}$] in the case of methane; $5.39\times10^{-7}$ [mol·(m$^2$·s·Pa)$^{-1}$] in the case of hydrogen; $9.66\times10^{-8}$ [mol·(m$^2$·s·Pa)$^{-1}$] in the case of nitrogen; and $1.92\times10^{-7}$ [mol·(m$^2$·s·Pa)$^{-1}$] in the case of helium. The gas permeation amount of the membrane composite 1 at 140°C was $5.68\times10^{-7}$ [mol·(m$^2$·s·Pa)$^{-1}$] in the case of carbon dioxide. The ideal separation coefficient $\alpha$ of carbon dioxide and methane at 50°C was 159. The indicator of a defect amount was $2.8\times10^{-8}$.

[Example 2]

[Preparation of reaction mixture]

To a solution obtained by mixing 681.5 g of an aqueous 1 mol/L-NaOH solution, 294.7 g of an aqueous 25wt%-KOH solution, and 13,000 g of water, 104.96 g of an aluminum hydroxide (containing 53.9% by mass of Al$_2$O$_3$, manufactured by Kyowa Chemical Industry Co., Ltd.) was added and dissolved by stirring to prepare a transparent solution.

To the obtained transparent solution, 406.2 g of an aqueous N,N,N-trimethyl-1-adamantanammonium hydroxide (hereinafter referred to as "TMADAOH") solution (containing 20% by mass of TMADAOH, manufactured by SACHEM, Inc.) was added as an organic template. Furthermore, 1,745.8 g of colloidal silica (manufactured by Nissan Chemical Corporation, SNOWTEX-S) was added, and then an obtained mixed solution was stirred for 2 hours. In this manner, an aqueous reaction mixture was obtained. The composition (molar ratio) of this reaction mixture was such that $SiO_2/Al_2O_3/NaOH/KOH/H_2O/TMADAOH = 1/0.064/0.02/0.08/95/0.04$ and $SiO_2/Al_2O_3 = 15.7$.

[Preparation of seed crystals]

Hydrothermal synthesis was carried out at 160°C for 2 days with gel composition (molar ratio) that $SiO_2/Al_2O_3/NaOH/KOH/H_2O/TMADAOH = 1/0.017/0.12/0.055/20/0.07$. A generated precipitate was filtered, washed with water, and dried. In this manner, CHA-type zeolite grains were obtained, and used as seed crystals. The grain size of the seed crystals was approximately 1 $\mu$m.

[Generation of zeolite membrane]

The seed crystals were dispersed in water. The above support was immersed in an obtained dispersion liquid for a given period of time, and then dried at 120°C for 2 hours or longer so that the seed crystals were adhered to the support. The amount of increase in mass after drying with respect to the mass of the support was determined, and the amount of adhering seed crystals was determined from the surface area of the support which had been in contact with the dispersion liquid. The amount of the adhering seed crystals was 0.67 g/m$^2$.

The support to which the seed crystals had been adhered was housed in a PFA inner cylinder (length: 1,200 mm) in an autoclave, and the above-described reaction mixture was put in the inner cylinder so that the support was immersed in the reaction mixture. The autoclave was then sealed, and the support was heated under autogenous pressure at 180°C for 18 hours in a static state. After a given period of time had elapsed, the support was left to cool, taken out from the reaction mixture, washed, and dried at 120°C for 2 hours or longer. The support was then subjected to calcination in air in an electric furnace at 500°C for 10 hours. A heating rate and a cooling rate at this time were both set to 0.5°C/min. Thus, a membrane composite 1 was obtained in which a zeolite membrane of a CHA-type zeolite was formed on the outer circumferential surface of the support.

From the difference between the mass of the membrane composite 2 and the mass of the support, the mass of the CHA-type zeolite crystallized on the support was determined. The mass of the CHA-type zeolite in the membrane composite 2 was 82 g/m$^2$.

[Measurement results]

From XRD measurement with respect to the membrane composite 2, it was confirmed that the CHA-type zeolite was generated. The ratio p2/p1 of an integrated intensity p2 of a peak at or around $2\theta$=17.9° to an integrated intensity p1 of a peak at or around $2\theta$=20.8° in XRD was 0.50. The ratio p3/p1 of an integrated intensity p3 of a peak at or around $2\theta$=9.6° to the integrated intensity p1 of the peak at or around $2\theta$=20.8° in the XRD was 2.84. The ratio p2/p1 of a peak intensity p2 at the peak at or around $2\theta$=17.9° to a peak intensity p1 of the peak at or around $2\theta$=20.8° in the XRD was 0.65. The ratio p3/p1 of a peak intensity p3 of the peak at or around $2\theta$=9.6° to the peak intensity p1 of the peak at or around $2\theta$=20.8° in the XRD was 1.52.

The incident angle of X-rays with respect to a surface incident angle is 0.5°. The ratio p3/p1 of an integrated intensity p3 of a peak at or around $2\theta$=9.6° to an integrated intensity p1 of a peak at or around $2\theta$=20.8° in GIXD was 32.7. The ratio p3/p4 of the integrated intensity p3 of the peak at or around $2\theta$=9.6° to an integrated intensity p4 of a peak at or around $2\theta$=16.2° in the GIXD was 51.0. The ratio p3/p1 of a peak intensity p3 of the peak at or around $2\theta$=9.6° to a peak intensity p1 of the peak at or around $2\theta$=20.8° in the GIXD was 32.7. The ratio p3/p4 of the peak intensity p3 of the peak at or around $2\theta$=9.6° to a peak intensity p4 of the peak at or around $2\theta$=16.2° in the GIXD was 51.0.

In a single-component gas permeability test, as pretreatment, carbon dioxide was introduced between the pressure-resistant container 2 and the membrane composite 2 at 140°C so that a pressure (external pressure of the membrane composite 1) was kept at approximately 0.16 MPa, a pressure of the inside of a cylinder of the membrane composite 2 (internal pressure of the membrane composite 1) was set to 0.10 MPa (atmospheric pressure), and then drying was carried out for approximately 70 minutes. The external pressure of the membrane composite 2 was then set to 0.2 MPa. At this time, the difference between the external pressure and the internal pressure of the membrane composite 2 was 0.1 MPa. Then, a temperature was set to 50°C. After the temperature had been stabilized, the supply gas 7 was changed to a gas to be measured, and a gas permeation amount was measured. When measurement was carried out on CF4 and SF6, the external pressure of the membrane composite 2 was set to 0.4 MPa. The difference between the external pressure and the internal pressure of the membrane composite 1 at the time of the measurement was 0.1 MPa.

An SAR at a surface point of the zeolite membrane of the membrane composite 2 was 29. The membrane thickness of the zeolite membrane of the membrane composite 2 was 9.4 $\mu$m in average.

According to single-component gas permeability tests, the gas permeation amount of the membrane composite 2 at 50°C were as follows: $4.49\times10^{-7}$ [mol·(m²·s·Pa)⁻¹] in the case of carbon dioxide; $2.16\times10^{-9}$ [mol·(m²·s·Pa)⁻¹] in the case of methane; $1.34\times10^{-7}$ [mol·(m²·s·Pa)⁻¹] in the case of hydrogen; $2.38\times10^{-8}$ [mol·(m²·s·Pa)⁻¹] in the case of nitrogen; and $4.81\times10^{-8}$ [mol·(m²·s·Pa)⁻¹] in the case of helium. The gas permeation amount of the membrane composite 2 at 110°C was $2.00\times10^{-7}$ [mol·(m²·s·Pa)⁻¹], in the case of carbon dioxide. The ideal separation coefficient $\alpha$ of carbon dioxide and methane at 50°C was 208. The indicator of a defect amount was $2.03\times10^{-8}$ [mol·μm(m²·s·Pa)⁻¹]. The gas permeation amount when the difference between the external pressure and the internal pressure of the membrane composite 2 was set to 0.3 MPa was as follows at 50°C: $1.50\times10^{-11}$ [mol·(m²·s·Pa)⁻¹] in the case of $SF_6$; and $1.50\times10^{-11}$ [mol·(m²·s·Pa)⁻¹] in the case of $CF_4$.

[Example 3]

A membrane composite 3 was synthesized by a procedure similar to that in Example 1, except that $SiO_2/Al_2O_3$ was set to 130. The weight of seed crystals adhering to a support was 1.2 g.

[Measurement results]

From XRD measurement with respect to the membrane composite 3, it was confirmed that a CHA-type zeolite was generated. The ratio p2/p1 of an integrated intensity p2 of a peak at or around $2\theta=17.9°$ to an integrated intensity p1 of a peak at or around $2\theta=20.8°$ in XRD was 0.41. The ratio p3/p1 of an integrated intensity p3 of a peak at or around $2\theta=9.6°$ to the integrated intensity p1 of the peak at or around $2\theta=20.8°$ in the XRD was 6.08. The ratio p2/p1 of a peak intensity p2 at the peak at or around $2\theta=17.9°$ to a peak intensity p1 of the peak at or around $2\theta=20.8°$ in the XRD was 0.47. The ratio p3/p1 of a peak intensity p3 of the peak at or around $2\theta=9.6°$ to the peak intensity p1 of the peak at or around $2\theta=20.8°$ in the XRD was 3.56.

The incident angle of X-rays with respect to a surface incident angle was set to 0.3°. The ratio p3/p1 of an integrated intensity p3 of a peak at or around $2\theta=9.6°$ to an integrated intensity p1 of a peak at or around $2\theta=20.8°$ in GIXD was 11.5. The ratio p3/p4 of the integrated intensity p3 of the peak at or around $2\theta=9.6°$ to an integrated intensity p4 of a peak at or around $2\theta=16.2°$ in the GIXD was 15.0.

In a single-component gas permeability test, as pretreatment, carbon dioxide was introduced between the pressure-resistant container 2 and the membrane composite 3 at 140°C so that a pressure (external pressure of the membrane composite 1) was kept at approximately 0.16 MPa, a pressure of the inside of a cylinder of the membrane composite 3 (internal pressure of the membrane composite 1) was set to 0.101 MPa (atmospheric pressure), and then drying was carried out for approximately 70 minutes. The external pressure of the membrane composite 2 was then set to 0.2 MPa. At this time, the difference between the external pressure and the internal pressure of the membrane composite 2 was 0.1 MPa. Then, a temperature was set to 50°C. After the temperature had been stabilized, the supply gas 7 was changed to a gas to be measured, and a gas permeation amount was measured. The difference between the external pressure and the internal pressure of the membrane composite 1 at the time of the measurement was 0.1 MPa.

An SAR at a surface point of a zeolite membrane of the membrane composite 3 was 52. The membrane thickness of the zeolite membrane of the membrane composite 3 was 3.0 μm in average.

According to single-component gas permeability tests, the gas permeation amount of the membrane composite 3 at 50°C was as follows: $2.22\times10^{-6}$ [mol·(m²·s·Pa)⁻¹] in the case of carbon dioxide; $2.37\times10^{-8}$ [mol·(m²·s·Pa)⁻¹] in the case of methane; $8.25\times10^{-7}$ [mol·(m²·s·Pa)⁻¹] in the case of hydrogen; $1.30\times10^{-7}$ [mol·(m²·s·Pa)⁻¹] in the case of nitrogen; $2.95\times10^{-7}$ [mol·(m²·s·Pa)⁻¹] in the case of helium; $8.15\times10^{-9}$ [mol·(m²·s·Pa)⁻¹] in the case of $SF_6$; and $9.23\times10^{-9}$ [mol·(m²·s·Pa)⁻¹] in the case of $CF_4$. The ideal separation coefficient $\alpha$ of carbon dioxide and methane at 50°C was 94. The indicator of a defect amount was $7.12\times10^{-8}$ [mol·μm·(m²·s·Pa)⁻¹].

[Example 4]

A membrane composite 4 was obtained as in Example 1, except that pressure treatment was carried out after the membrane composite was obtained as in Example 1.

As the pressure treatment, an operation in which desalted water was used as a solvent and a water pressure of 10 MPaG was applied to the outer side of a membrane for a few seconds and then released was repeated 30 times.

Specifically, the membrane composite was set in a water-sealed module, and then pressurized by supplying water with use of a hydraulic pump (T-100K, manufactured by Kyowa). Note that one end of the zeolite membrane composite was sealed with a plug, and the other end was sealed with a top insert having a hole. The zeolite membrane composite had a structure (leak) such that the inside of the zeolite membrane composite was in communication with the outside of an autoclave through the hole in the top insert. During pressurization, the inside of a support was kept at atmospheric pressure.

From the difference between the mass of the membrane composite 4 and the mass of the support, the mass of a CHA-type zeolite crystallized on the support was determined. The mass of the CHA-type zeolite in the membrane composite 4 was 32.2 g/m$^2$.

[Measurement results]

From XRD measurement with respect to the membrane composite 4, it was confirmed that the CHA-type zeolite was generated. The ratio p2/p1 of an integrated intensity p2 of a peak at or around 2θ=17.9° to an integrated intensity p1 of a peak at or around 2θ=20.8° in XRD was 0.50. The ratio p3/p1 of an integrated intensity p3 of a peak at or around 2θ=9.6° to the integrated intensity p1 of the peak at or around 2θ=20.8° in the XRD was 6.35.

An X-ray diffraction pattern in GIXD of the membrane composite 4 is illustrated in Fig. 4. The incident angle of X-rays with respect to a surface incident angle is 0.5°. The ratio p3/p1 of an integrated intensity p3 of a peak at or around 2θ=9.6° to an integrated intensity p1 of a peak at or around 2θ=20.8° in the GIXD was 45.94. The ratio p3/p4 of the integrated intensity p3 of the peak at or around 2θ=9.6° to an integrated intensity p4 of a peak at or around 2θ=16.2° in the GIXD was 1.15.

In a single-component gas permeability test, as pretreatment, carbon dioxide was introduced between the pressure-resistant container 2 and the membrane composite 1 at 140°C so that a pressure (external pressure of the membrane composite 1) was kept at approximately 0.16 MPa, a pressure of the inside of a cylinder of the membrane composite 1 (internal pressure of the membrane composite 1) was set to 0.10 MPa (atmospheric pressure), and then drying was carried out for approximately 70 minutes. The external pressure of the membrane composite 1 was then set to 0.2 MPa. At this time, the difference between the external pressure and the internal pressure of the membrane composite 4 was 0.1 MPa. Then, a temperature was set to 50°C. After the temperature had been stabilized, the supply gas 7 was changed to a gas to be measured, and a gas permeation amount was measured. The difference between the external pressure and the internal pressure of the membrane composite 1 at the time of the measurement was 0.1 MPa.

An SAR at a surface point of the zeolite membrane of the membrane composite 4 was 54. The membrane thickness of the zeolite membrane of the membrane composite 4 was 2.5 μm in average.

According to single-component gas permeability tests, the gas permeation amount of the membrane composite 4 at 50°C was as follows: $1.44\times10^{-6}$ [mol·(m$^2$·s·Pa)$^{-1}$] in the case of carbon dioxide; $6.87\times10^{-9}$ [mol·(m$^2$·s·Pa)$^{-1}$] in the case of methane; $5.05\times10^{-7}$ [mol·(m$^2$·s·Pa)$^{-1}$] in the case of hydrogen; $8.18\times10^{-8}$ [mol·(m$^2$·s·Pa)$^{-1}$] in the case of nitrogen; $1.76\times10^{-7}$ [mol·(m$^2$·s·Pa)$^{-1}$] in the case of helium; $1.59\times10^{-9}$ [mol·(m$^2$·s·Pa)$^{-1}$] in the case of SF$_6$; and $2.28\times10^{-9}$ [mol·(m$^2$·s·Pa)$^{-1}$] in the case of CF$_4$. The ideal separation coefficient α of carbon dioxide and methane at 50°C was 210. The indicator of a defect amount was $1.72\times10^{-8}$.

[Comparative Example 1]

A membrane composite C1 was prepared as in Example 1, except that, in preparation of a reaction mixture, an aqueous 1 mol/L-KOH solution was used as an aqueous KOH solution, aluminum hydroxide (containing 53.5% by mass of Al$_2$O$_3$, manufactured by Aldrich) was added in an amount of 0.152 g, and the reaction mixture was caused to have composition (molar ratio) that SiO$_2$/Al$_2$O$_3$/NaOH/KOH/H$_2$O/TMADAOH = 1/0.01/0.15/0.1/100/0.04 and SiO$_2$/Al$_2$O$_3$ = 100. In production of the membrane composite C1, the amount of adhering seed crystals was 9.9 g/m$^2$. The mass of a CHA-type zeolite in the membrane composite C1 was 122 g/m$^2$.

[Measurement results]

From XRD measurement with respect to the membrane composite C1, it was confirmed that the CHA-type zeolite was generated. The ratio p2/p1 of integrated intensities of peaks in XRD was 0.3. The ratio p3/p1 of integrated intensities of peaks in the XRD was 3.1.

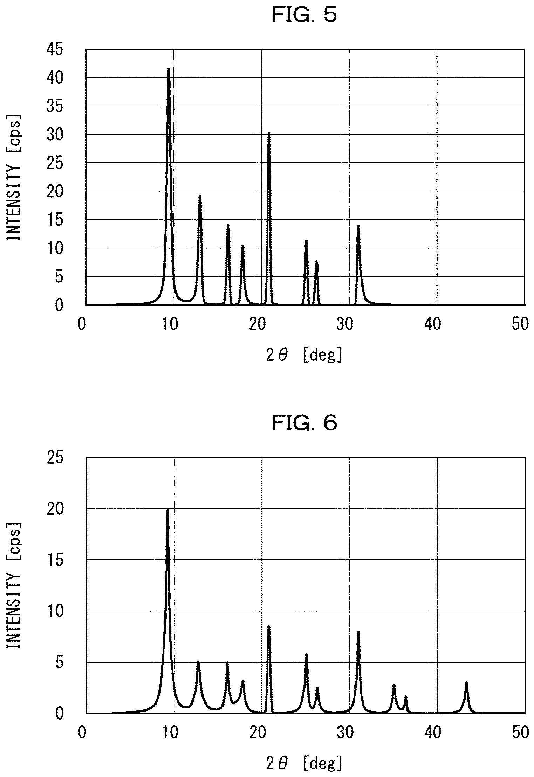

An X-ray diffraction pattern in GIXD of the membrane composite C1 is illustrated in Fig. 5. The incident angle of X-rays is 0.4°. The ratio p3/p1 of integrated intensities of peaks in the GIXD was 2.9. The ratio p3/p4 of integrated intensities of peaks in the GIXD was 5.7.

The SAR of a zeolite membrane of the membrane composite C1 was 40.2. The membrane thickness of the zeolite membrane of the membrane composite C1 was approximately 8 μm in average. The air permeation amount of the membrane composite C1 was 570 L/(m$^2$·h). The water adsorption capacity of the membrane composite C1 at a relative pressure of 0.8 as measured from a water vapor adsorption isotherm was 2.2 times the water adsorption capacity thereof at a relative pressure of 0.2.

The gas permeation amount of the membrane composite C1 at 50°C was as follows: $2.36\times10^{-6}$ [mol·(m$^2$·s·Pa)$^{-1}$] in the case of carbon dioxide; $3.91\times10^{-8}$ [mol·(m$^2$·s·Pa)$^{-1}$] in the case of methane; $1.01\times10^{-6}$ [mol·(m$^2$·s·Pa)$^{-1}$] in the case of hydrogen; $1.81\times10^{-7}$ [mol·(m$^2$·s·Pa)$^{-1}$] in the case of nitrogen; and $4.28\times10^{-7}$

[mol·(m$^2$·s·Pa)$^{-1}$] in the case of helium. The gas permeation amount of the membrane composite 1 at 140°C was as follows: 8.20×10$^{-7}$ [mol·(m$^2$·s·Pa)$^{-1}$] in the case of carbon dioxide; 7.07×10$^{-8}$ [mol·(m$^2$·s·Pa)$^{-1}$] in the case of methane; 8.93×10$^{-7}$ [mol·(m$^2$·s·Pa)$^{-1}$] in the case of hydrogen; 1.34×10$^{-7}$ [mol·(m$^2$·s·Pa)$^{-1}$] in the case of nitrogen; and 4.79×10$^{-7}$ [mol·(m$^2$·s·Pa)$^{-1}$] in the case of helium. The ideal separation coefficient $\alpha$ of carbon dioxide and methane at 50°C was 60. The indicator of a defect amount was 3.13×10$^{-7}$ [mol·$\mu$m·(m$^2$·s·Pa)$^{-1}$].

[Comparative Example 2]

[Preparation of reaction mixture]

To a mixture of 1.24 g of an aqueous 1 mol/L-NaOH solution, 4.98 g of an aqueous 1 mol/L-KOH solution, and 0.104 g of aluminum hydroxide (containing 53.5% by mass of Al$_2$O$_3$, manufactured by Aldrich), 114 g of water was added. The mixture was dissolved by stirring to prepare a transparent solution.

To the obtained transparent solution, 2.44 g of an aqueous TMADAOH solution (containing 25% by mass of TMADAOH, manufactured by SACHEM, Inc.) was added as an organic template. Furthermore, 10.8 g of colloidal silica (manufactured by Nissan Chemical Corporation, SNOWTEX-40) was added, and then an obtained mixed solution was stirred for 2 hours. In this manner, an aqueous reaction mixture was obtained. The composition (molar ratio) of this reaction mixture was such that SiO$_2$/Al$_2$O$_3$/NaOH/KOH/H$_2$O/TMADAOH = 1/0.0077/0.017/0.069/100/0.04 and SiO$_2$/Al$_2$O$_3$ = 130.

[Preparation of inorganic porous carrier]

A porous alumina tube (outer diameter: 12 mm, inner diameter: 9 mm) was cut to a length of 400 mm, and a powder generated at the time of the cutting was removed by blowing compressed air. In this manner, an inorganic porous support was obtained.

[Preparation of seed crystals]

By a method similar to that in Example 1, CHA-type zeolite grains having a grain size of approximately 0.5 $\mu$m were obtained by crystallization through hydrothermal synthesis at 160°C for 2 days with gel composition that SiO$_2$/Al$_2$O$_3$/NaOH/KOH/H$_2$O/TMADAOH = 1/0.033/0.1/0.06/40/0.07. The CHA-type zeolite grains were used as seed crystals.

[Generation of zeolite membrane]

In a desalted water, the seed crystals were dispersed in an amount of approximately 1% by mass. The support was immersed in an obtained dispersion liquid for a given period of time, and then dried at 100°C for 4 hours or longer so that the seed crystals were adhered to the support. The amount of adhering seed crystals was 1.4 g/m$^2$.

As in Example 1, the support to which the seed crystals had been adhered was immersed in the reaction mixture in an autoclave, heated under autogenous pressure at 160°C for 48 hours, washed, dried, and then subjected to calcination to obtain a membrane composite C2. The mass of a CHA-type zeolite in the membrane composite C2 was 46 g/m$^2$.

[Measurement results]

From XRD measurement with respect to the membrane composite C2, it was confirmed that the CHA-type zeolite was generated. The ratio p2/p1 of integrated intensities of peaks in XRD was 0.3. The ratio p3/p1 of integrated intensities of peaks in the XRD was 3.3.

An X-ray diffraction pattern in GIXD of the membrane composite C2 is illustrated in Fig. 6. The incident angle of X-rays is 0.1°. The ratio p3/p1 of integrated intensities of peaks in the GIXD was 5.7. The ratio p3/p4 of integrated intensities of peaks in the GIXD was 5.8.

The air permeation amount of the membrane composite C2 was 315 L/(m$^2$·h). The water adsorption capacity of the membrane composite C2 at a relative pressure of 0.8 as measured from a water vapor adsorption isotherm was 2.3 times the water adsorption capacity thereof at a relative pressure of 0.2.

The gas permeation amount of the membrane composite C2 at 50°C was as follows: 2.01×10$^{-6}$ [mol·(m$^2$·s·Pa)$^{-1}$] in the case of carbon dioxide; 1.60×10$^{-8}$ [mol·(m$^2$·s·Pa)$^{-1}$] in the case of methane; 6.65×10$^{-7}$ [mol·(m$^2$·s·Pa)$^{-1}$] in the case of hydrogen; 1.13×10$^{-7}$ [mol·(m$^2$·s·Pa)$^{-1}$] in the case of nitrogen; and 2.46×10$^{-7}$ [mol·(m$^2$·s·Pa)$^{-1}$] in the case of helium. The gas permeation amount of the membrane composite C2 at 140°C was as follows: 6.17×10$^{-7}$ [mol·(m$^2$·s·Pa)$^{-1}$] in the case of carbon dioxide; 1.52×10$^{-8}$ [mol·(m$^2$·s·Pa)$^{-1}$] in the case of methane; 4.97×10$^{-7}$ [mol·(m$^2$·s·Pa)$^{-1}$] in the case of hydrogen; 6.18×10$^{-8}$ [mol·(m$^2$·s·Pa)$^{-1}$] in the case of nitrogen; and 2.34×10$^{-7}$ [mol·(m$^2$·s·Pa)$^{-1}$] in the case of helium. The

ideal separation coefficient $\alpha$ of carbon dioxide and methane at 50°C was 126. The indicator of a defect amount was $4.80 \times 10^{-7}$ [mol·$\mu$m·(m$^2$·s·Pa)$^{-1}$].

[Comparative Example 3]

[Support step]

A porous alumina tube (outer diameter: 12 mm, inner diameter: 9 mm, average pore size: 1.45 $\mu$m) was used as a porous support. As zeolite seed crystals, CHA-type zeolite seed crystals were used which had been obtained by (i) adding a CHA-type zeolite in an amount of 2% by weight relative to $SiO_2$ as seed crystals to a gel composition containing $SiO_2$/$Al_2O_3$/NaOH/KOH/$H_2O$/N,N,N-trimethyl-1-adamantanammonium hydroxide (TMADAOH) at a ratio of 1.00/0.033/0.120/0.0550/22.317/0.07 and (ii) carrying out crystallization through hydrothermal synthesis at 160°C for 2 days. The average grain size of the zeolite seed crystals was 1.02 $\mu$m.

In water, the zeolite seed crystals were dispersed in an amount of 0.5% by mass. The porous support was immersed in an obtained dispersion liquid for 3 minutes, and then dried at 120°C for 2 hours or longer so that the zeolite seed crystals were supported on the porous support. The mass of the porous support before and after the supporting was measured. As a result, the amount of supported zeolite seed crystals was 1.70g/m$^2$.

[Hydrothermal synthesis step]

An aqueous 25% KOH solution and an aqueous 1N-NaOH solution were added to desalted water, and aluminum hydroxide (containing 53.5% by mass of $Al_2O_3$, manufactured by Aldrich) was added and dissolved to prepare a transparent solution. Furthermore, an aqueous N,N,N-trimethyl-1-adamantanammonium hydroxide (hereinafter referred to as "TMADAOH") solution (containing 20% by mass of TMADAOH, manufactured by SACHEM, Inc.) was added as an organic template. Thereafter, colloidal silica (SNOWTEX ST-S, manufactured by Nissan Chemical Corporation) was added. An obtained mixed solution was stirred for 120 minutes or longer to prepare an aqueous reaction mixture. The composition (molar ratio) of this aqueous reaction mixture was such that $SiO_2$/$Al_2O_3$/NaOH/KOH/$H_2O$/TMADAOH = 1.0/0.064/0.075/0.15/100/0.044 and $SiO_2$/$Al_2O_3$ = 15.7

The support to which the seed crystals had been adhered was vertically immersed in a reaction vessel containing the above aqueous reaction mixture, and then the reaction vessel was sealed. A period of time in which the reaction vessel was heated to 180°C was set to 5 hours, and the support was heated at 180°C for 24 hours under autogenous pressure in a static state. In this process, the ratio of the aqueous reaction mixture and the support was set to approximately 2,050 g of the aqueous reaction mixture per meter of the support, and the entire support was brought into contact with the aqueous reaction mixture. After a given period of time had elapsed, the support was left to cool. Then, an obtained zeolite membrane composite was taken out from the aqueous reaction mixture, washed, and dried at 120°C for 2 hours or longer. The air permeation flux of the membrane composite which had not been subjected to calcination during the production process of a membrane composite C3 was 0 mL/(m$^2$·min).

[Removal step]

After the hydrothermal synthesis, the membrane composite was left to cool, taken out from an inner cylinder, washed, and then dried at 120°C for 5 hours or longer. After drying, the membrane composite was subjected to calcination in an electric furnace at 500°C for 10 hours so that the organic template remaining in the porous support was removed. As a result, the porous support-zeolite membrane composite C3 of Comparative Example 3 was obtained. A heating rate and a cooling rate during the calcination were both 0.5°C/min.

[Measurement results]

From XRD measurement with respect to the membrane composite C3, it was confirmed that the CHA-type zeolite was generated. The ratio p2/p1 of integrated intensities of peaks in XRD was 1.04. The ratio p3/p1 of integrated intensities of peaks in the XRD was 3.29.

The incident angle of X-rays in X-ray diffraction in GIXD of the membrane composite C3 is 0.6°. The ratio p3/p1 of integrated intensities of peaks in the GIXD was 4.62. The ratio p3/p4 of integrated intensities of peaks in the GIXD was 6.57.

An SAR at a surface point of the zeolite membrane of the membrane composite C3 was 21. The membrane thickness of the zeolite membrane of the membrane composite 4 was 17.1 $\mu$m in average.

The gas permeation amount of the membrane composite C3 at 50°C was as follows: $3.62 \times 10^{-7}$ [mol·(m$^2$·s·Pa)$^{-1}$] in the case of carbon dioxide; $5.51 \times 10^{-9}$ [mol·(m$^2$·s·Pa)$^{-1}$] in the case of methane; $7.14 \times 10^{-8}$ [mol·(m$^2$·s·Pa)$^{-1}$] in the case

of hydrogen; $1.61\times10^{-7}$ [mol·(m$^2$·s·Pa)$^{-1}$] in the case of nitrogen; $2.70\times10^{-8}$ [mol·(m$^2$·s·Pa)$^{-1}$] in the case of helium; $8.40\times10^{-10}$ [mol·(m$^2$·s·Pa)$^{-1}$] in the case of SF$_6$; and $1.10\times10^{-9}$ [mol·(m$^2$·s·Pa)$^{-1}$] in the case of CF$_4$. The ideal separation coefficient $\alpha$ of carbon dioxide and methane at 50°C was 66. The indicator of a defect amount was $9.42\times10^{-8}$.

[Discussion]

The results in Examples 1 to 4 are shown in Table 1 and Fig. 4. The results in Comparative Examples 1 to 3 are shown in Table 2 and Figs. 5 and 6.

[Table 1]

Table 1

|  |  |  | Example 1 | Example 2 | Examole 3 | Example 4 |
|---|---|---|---|---|---|---|
| Membrane composite No. | | | 1 | 2 | 3 | 4 |
| GIXD integrated intensity ratio | p3/p1 | ( ) | 7.80 | 32.7 | 11.5 | 45.94 |
|  | p4/p1 | ( - ) | 1.15 | 0.64 | 0.76 | 1.15 |
|  | p3/p4 | ( - ) | 14.10 | 51.0 | 15.0 | 39.86 |
| XRD integrated intensity ratio | p2/p1 | ( - ) | 0.40 | 0.50 | 0.41 | 0.50 |
|  | p3/p1 | ( - ) | 5.35 | 2.84 | 6.08 | 6.35 |
|  | p3/p2 p3/p2 | ( - ) | 13.54 | 5.66 5.66 | 14.74 14.74 | 12.75 |
| XRD peak intensity ratio | p2/p1 | ( - ) | 0.44 | 0.65 | 0.47 |  |
|  | p3/p1 | ( - ) | 3.05 | 1.52 | 3.56 |  |
|  | p3/p2 | ( - ) ( - ) | 6.86 | 2.34 | 7.58 |  |
| SAR | Surface area | ( - ) | 46 |  |  |  |
|  | Surface point | ( - ) | 54 | 29 | 52 | 54.1 |
| Membrane thickness | | (μm) | 2.8 | 9.4 | 3.0 | 2.5 |
| Air permeation amount | | (L/(m$^2$·h)) | - |  |  |  |
| Water adsorption capacity ratio Rw | | (-) | - |  |  |  |

(continued)

| | | | Example 1 | Example 2 | Examole 3 | Example 4 |
|---|---|---|---|---|---|---|
| Membrane composite No. | | | 1 | 2 | 3 | 4 |
| Gas permeation amount (mol/(m²·s·Pa)) | 50°C | $CO_2$ | $1.58 \times 10^{-6}$ | $4.49 \times 10^{-7}$ | $2.22 \times 10^{-6}$ | $1.44 \times 10^{-6}$ |
| | | $CH_4$ | $9.97 \times 10^{-9}$ | $2.16 \times 10^{-9}$ | $2.37 \times 10^{-8}$ | $6.87 \times 10^{-9}$ |
| | | $H_2$ | $5.39 \times 10^{-7}$ | $1.34 \times 10^{-7}$ | $8.25 \times 10^{-7}$ | $5.05 \times 10^{-7}$ |
| | | $N_2$ | $9.66 \times 10^{-8}$ | $2.38 \times 10^{-8}$ | $1.30 \times 10^{-7}$ | $8.18 \times 10^{-8}$ |
| | | He | $1.92 \times 10^{-7}$ | $4.81 \times 10^{-8}$ | $2.95 \times 10^{-7}$ | $1.76 \times 10^{-7}$ |
| | | $SF_6$ | | | $8.15 \times 10^{-9}$ | $1.59 \times 10^{-9}$ |
| | | $CF_4$ | | | $9.23 \times 10^{-9}$ | $2.28 \times 10^{-9}$ |
| | 110°C | $CO_2$ | | $2.00 \times 10^{-7}$ | $1.03 \times 10^{-6}$ | $7.47 \times 10^{-7}$ |
| | 140°C | $CO_2$ | $5.68 \times 10^{-7}$ | | | |
| | | $CH_4$ | | | | |
| | | $H_2$ | | | | |
| | | $N_2$ | | | | |
| | | He | | | | |
| | | $SF_6$ | | | | |
| | | $CF_4$ | | | | |
| Ideal separation coefficient $\alpha$ | | ( - ) | 159 | 208 | 94 | 210 |
| Indicator of defect amount ($CH_4$ permeability coefficient) | | (mol μm/ (m²·s·Pa)) | $2.79 \times 10^{-8}$ | $2.03 \times 10^{-8}$ | $7.11 \times 10^{-8}$ | $1.72 \times 10^{-8}$ |

[Table 2]

Table 2

| | | | Comparative Example 1 | Comparative Example 2 | Comparative Example 3 |
|---|---|---|---|---|---|
| Membrane composite No. | | | C1 | C2 | C3 |
| GIXD integrated intensity ratio | p3/p1 | ( - ) | 2.90 | 5.70 | 4.62 |
| | p4/p1 | ( - ) | 0.51 | 0.98 | 0.70 |
| | p3/p4 | ( - ) | 5.70 | 5.80 | 6.57 |
| XRD integrated intensity ratio | p2/p1 | ( - ) | 0.30 | 0.37 | 1.04 |
| | p3/p1 | ( - ) | 3.13 | 3.32 | 3.29 |
| | p3/p2 | ( - ) | 10.36 | 8.93 | 3.15 |
| XRD peak intensity ratio | p2/p1 | ( - ) | 0.30 | 0.30 | 2.43 |
| | p3/p1 | ( - ) | 2.15 | 2.16 | 1.46 |
| | p3/p2 | ( - ) | 7.26 | 7.19 | 0.60 |
| SAR | Surface area | ( - ) | 40.2 | - | |
| | Surface point | ( - ) | | | 21 |
| Membrane thickness | | (μm) | 8.0 | | 17.1 |

(continued)

| | | Comparative Example 1 | Comparative Example 2 | Comparative Example 3 |
|---|---|---|---|---|
| Membrane composite No. | | C1 | C2 | C3 |
| Air permeation amount | $(L/(m^2 \cdot h))$ | 570 | 315 | |
| Water adsorption capacity ratio Rw | ( - ) | 2.2 | 2.3 | |
| Gas permeation amount $(mol/(m^2 \cdot s \cdot Pa))$ | 50°C $CO_2$ | $2.36 \times 10^{-6}$ | $2.01 \times 10^{-6}$ | $3.62 \times 10^{-7}$ |
| | 50°C $CH_4$ | $3.91 \times 10^{-8}$ | $1.60 \times 10^{-8}$ | $5.51 \times 10^{-9}$ |
| | 50°C $H_2$ | $1.01 \times 10^{-6}$ | $6.65 \times 10^{-7}$ | $1.61 \times 10^{-7}$ |
| | 50°C $N_2$ | $1.81 \times 10^{-7}$ | $1.13 \times 10^{-7}$ | $2.70 \times 10^{-8}$ |
| | 50°C He | $4.28 \times 10^{-7}$ | $2.46 \times 10^{-7}$ | $7.14 \times 10^{-8}$ |
| | 50°C $SF_6$ | | | $8.42 \times 10^{-10}$ |
| | 50°C $CF_4$ | | | $1.11 \times 10^{-9}$ |
| | 110°C $CO_2$ | | | $2.40 \times 10^{-7}$ |
| | 140°C $CO_2$ | $8.20 \times 10^{-7}$ | $6.17 \times 10^{-7}$ | |
| | 140°C $CH_4$ | $7.07 \times 10^{-8}$ | $1.52 \times 10^{-8}$ | |
| | 140°C $H_2$ | $8.93 \times 10^{-7}$ | $4.97 \times 10^{-7}$ | |
| | 140°C $N_2$ | $1.34 \times 10^{-7}$ | $6.18 \times 10^{-8}$ | |
| | 140°C He | $4.79 \times 10^{-7}$ | $2.34 \times 10^{-7}$ | |
| | 140°C $SF_6$ | | | |
| | 140°C $CF_4$ | | | |
| Ideal separation coefficient $\alpha$ | (-) | 60 | 126 | 66 |
| Indicator of defect amount ($CH_4$ permeability coefficient) | $(mol \cdot \mu m/ (m^2 \cdot s \cdot Pa))$ | $3.13 \times 10^{-7}$ | $4.80 \times 10^{-8}$ | $9.42 \times 10^{-8}$ |

As is clear from Tables 1 and 2, the ratios p2/p1 and p3/pl in the XRD of the membrane composites 1 to 4 are comparable to those of the membrane composites C1 to C3. In contrast, the ratios p3/p1 in the GIXD of the membrane composites 1 to 4 are clearly higher than those of the membrane composites C1 to C3. The membrane composites 1 to 4 generally have high separation performance compared with the membrane composites C1 to C3. Therefore, it is found that the membrane composites 1 to 4 have zeolite membranes having high orientation compared with the membrane composites C1 to C3 and consequently exhibit higher separation performance. Moreover, regarding the relationship between the ratio p3/p1 of the integrated intensities in the GIXD and the indicator of the defect amount, it is found that, as p3/p1 increases, the indicator of the defect amount decreases and the performance of the membrane increases.

Industrial Applicability

The present invention can be used to produce a purified component from a mixture of gases or liquids.

Reference Signs List

1, 31 Membrane composite
11 Support
11A First surface layer part
11B Second surface layer part
11C Inside part
12 Zeolite membrane
32 Pressure-resistant container

33 End pin
34 Connection part
35 Pressure gauge
36 Supply gas
37 Permeation gas
38 Piping

**Claims**

1. A zeolite membrane composite comprising an inorganic porous support and a zeolite membrane which is formed on a surface of the inorganic porous support, wherein
   in an X-ray diffraction pattern obtained by irradiating a surface of the zeolite membrane with X-rays at a minimum incident angle that allows the X-rays to pass through the zeolite membrane, an integrated intensity of a peak at or around $2\theta=9.6°$ is 6.0 times or more an integrated intensity of a peak at or around $2\theta=20.8°$.

2. The zeolite membrane composite as set forth in claim 1, wherein, in the X-ray diffraction pattern obtained by irradiating the surface of the zeolite membrane with the X-rays at the minimum incident angle that allows the X-rays to pass through the zeolite membrane, the integrated intensity of the peak at or around $2\theta=9.6°$ is 6.0 times or more an integrated intensity of a peak at or around $2\theta=16.8°$.

3. The zeolite membrane composite as set forth in claim 1, wherein, in an X-ray diffraction pattern obtained by irradiating the surface of the zeolite membrane with X-rays that reach the inorganic porous support, an integrated intensity of a peak at or around $2\theta=17.9°$ is less than 0.5 times an integrated intensity of a peak at or around $2\theta=20.8°$, and an integrated intensity of a peak at or around $2\theta=9.6°$ is 2.0 times or more but less than 6.0 times the integrated intensity of the peak at or around $2\theta=20.8°$.

4. The zeolite membrane composite as set forth in claim 1, wherein an $SiO_2/Al_2O_3$ molar ratio of the zeolite membrane is 6 or more but 500 or less.

5. A method for producing a purified component, the method comprising: bringing, into contact with the zeolite membrane composite recited in any one of claims 1 through 4, a mixture containing a first component for which the zeolite membrane of the zeolite membrane composite has higher permeability and a second component for which the zeolite membrane of the zeolite membrane composite has lower permeability; and obtaining one or both of a first purified component which is the first component that has passed through the zeolite membrane and a second purified component which is the second component that has not passed through the zeolite membrane.

FIG. 1

FIG. 2

## FIG. 3

## FIG. 4

## FIG. 5

## FIG. 6

## INTERNATIONAL SEARCH REPORT

International application No.

**PCT/JP2024/013527**

### A. CLASSIFICATION OF SUBJECT MATTER

*B01D 71/02*(2006.01)i; *B01D 69/00*(2006.01)i; *B01D 69/10*(2006.01)i; *B01D 69/12*(2006.01)i; *C01B 39/48*(2006.01)i
FI:   B01D71/02; B01D69/00; B01D69/10; B01D69/12; C01B39/48

According to International Patent Classification (IPC) or to both national classification and IPC

### B. FIELDS SEARCHED

Minimum documentation searched (classification system followed by classification symbols)

B01D61/00-71/82, B01D53/22, C02F1/44, C01B39/46-39/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2013/125660 A1 (MITSUBISHI CHEMICAL CORPORATION) 29 August 2013 (2013-08-29) claims 1-2, paragraphs [0020]-[0243], fig. 1-7 | 1-5 |
| A | JP 2020-196008 A (JAPAN OIL, GAS AND METALS NATIONAL CORPORATION) 10 December 2020 (2020-12-10) | 1-5 |
| A | JP 2022-74397 A (HITACHI SHIPBUILDING ENG CO.) 18 May 2022 (2022-05-18) | 1-5 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 June 2024** | **25 June 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

# EP 4 691 613 A1

## INTERNATIONAL SEARCH REPORT
### Information on patent family members

International application No.

**PCT/JP2024/013527**

| Patent document cited in search report | | | Publication date (day/month/year) | Patent family member(s) | | | Publication date (day/month/year) |
|---|---|---|---|---|---|---|---|
| WO | 2013/125660 | A1 | 29 August 2013 | US | 2014/0360938 | A1 | |
| | | | | claims 1-2, paragraphs [0031]-[0286], fig. 1-7 | | | |
| | | | | CN | 104144739 | A | |
| | | | | EP | 2818232 | A1 | |
| | | | | JP | 2017-64716 | A | |
| | | | | JP | 2018-75564 | A | |
| | | | | KR | 10-2014-0130444 | A | |
| JP | 2020-196008 | A | 10 December 2020 | (Family: none) | | | |
| JP | 2022-74397 | A | 18 May 2022 | (Family: none) | | | |

Form PCT/ISA/210 (patent family annex) (July 2022)

41

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013125660 A
- US 4544538 A
- US 20080075656

**Non-patent literature cited in the description**

- COLLECTION OF SIMULATED XRD POWDER PATTERNS FOR ZEOLITE. ELSEVIER, 2001
- ATLAS OF ZEOLITE FRAMEWORK TYPES. ELSEVIER, 2001
- Gas Separation/Purification Techniques. Toray Research Center, 2007, 22